# EUROPEAN PATENT SPECIFICATION

(11) **EP 2 544 286 B1**
(45) Date of publication and mention of the grant of the patent: **01.06.2016**
(21) Application number: 11750379.7
(22) Date of filing: 02.03.2011
(51) Int. Cl.: H01M 8/04, H01M 8/00

(54) **FUEL CELL SYSTEM AND METHOD OF OPERATING THE SAME**
BRENNSTOFFZELLENSYSTEM UND BETRIEBSVERFAHREN DAFÜR
SYSTÈME DE PILE À COMBUSTIBLE ET PROCÉDÉ DE FONCTIONNEMENT DE CELUI-CI

(30) Priority: 04.03.2010 JP 2010047450
(43) Date of publication of application: 09.01.2013
(73) Proprietor: Panasonic Corporation, Kadoma-shi Osaka 571-8501 (JP)
(72) Inventor: URATA, Takayuki, Osaka-shi, Osaka 540-6207 (JP); NAKAMURA, Akinari, Osaka-shi, Osaka 540-6207 (JP); YASUDA, Shigeki, Osaka-shi, Osaka 540-6207 (JP)
(74) Representative: Grünecker Patent- und Rechtsanwälte PartG mbB
(86) International application number: PCT/JP2011/001224
(87) International publication number: WO 2011/108266

(56) References cited:
- JP-A- 2 176 327
- JP-A- 2 259 290
- JP-A- 2005 050 554
- JP-A- 2008 159 462
- JP-A- 2008 273 822
- JP-A- 2009 152 092
- JP-A- 2009 191 448
- JP-A- 2009 266 611

## Description

### Technical Field

The present invention relates to a fuel cell system and a method of operating the fuel cell system. More particularly, the present invention relates to a fuel cell system including a water tank and a water amount sensor, and to a method of operating the fuel cell system.

### Background Art

Fuel cell power generators used in stationary co-generation systems are expected to serve as distributed power generators and heat supply sources.

A conventional fuel cell power generator produces a fuel from a raw material by a hydrogen generator, and generates electric power by a cell stack. Heat that is generated when the electric power is generated can be utilized in supplying hot water. Water that is generated at the same time as the heat is generated is utilized, for example, in a reaction that is caused to occur when the fuel is produced. Therefore, it is important for such a fuel cell power generator to effectively utilize the water that is generated when the electric power is generated, and to realize high reliability.

A fuel cell system disclosed in Patent Literature 1 includes a fuel cell, a water tank which stores water for use in cooling the fuel cell, and a controller. The controller outputs an abnormality signal in the following cases: a case where a cumulative water discharge amount that is measured from when a water supply pump configured to supply water to the water tank stops the water supply has become a first threshold or more but a water level detected by a first water level sensor is still higher than a first water level; a case where a cumulative water supply amount that is measured from the start of the water supply by the water supply pump has become a second threshold or more but a water level detected by the first water level sensor is still lower than a second water level; and a case where the cumulative water discharge amount that is measured from when the water supply pump stops the water supply is less than a third threshold but a water level detected by the first water level sensor is a third water level or lower.

### Citation List

### Patent Literature

PTL 1: Japanese Laid-Open Patent Application Publication No. 2009-152092

### Summary of Invention

### Technical Problem

However, in the configuration disclosed in Patent Literature 1, it is necessary to use a flow meter, or to perform calculation using a calculator, in order to obtain the cumulative water discharge amount or the cumulative water supply amount. In the case of using a flow meter, it is necessary to place the flow meter on a discharge passage or on a supply passage. Accordingly, the number of components to be included is increased, which results in high cost. Meanwhile, cases where the calculation using a calculator is performed include the following cases: a case where the calculation is performed by using at least one of a water flow rate and the pump's operating period, which are estimated from a command value specifying the pump's operating amount; and a case where the calculation is performed by using an opening period of a valve. However, in a case where there is an abnormality in the pump or the valve, the cumulative water discharge amount or the cumulative water supply amount cannot be calculated accurately. Thus, in this case, the accuracy of abnormality detection cannot be improved.

The present invention solves the above conventional problems. An object of the present invention is to provide a fuel cell system and a method of operating the fuel cell system, which are capable of detecting abnormality with a simplified configuration and improved reliability.

### Solution to Problem

In order to solve the above-described conventional problems, a fuel cell system according to the present invention includes: a fuel cell system and a method of operating a fuel cell system according to claims 1 and 12 respectively.

### Advantageous Effects of Invention

The fuel cell system and the method of operating the fuel cell system according to the present invention, which adopt the above-described configurations, provide an advantageous effect in which abnormalities can be detected with a simplified configuration and improved reliability.

### Brief Description of Drawings

[Fig. 1] Fig. 1 is a block diagram showing an example of a schematic configuration of a fuel cell system according to Embodiment 1.
[Figs. 2A to 2C] Figs. 2A to 2C are flowcharts each showing an example of a method of operating the fuel cell system according to Embodiment 1; Fig. 2A shows a case where a determination operation is performed as an abnormality handling operation;
Fig. 2B shows a case where outputting of an abnormality signal is performed as the abnormality handling operation; and Fig. 2C shows a case where stopping of the system's operation is performed as the abnormality handling operation.
[Fig. 3] Fig. 3 is a block diagram showing an example of a schematic configuration of a fuel cell system according to Example 1 of Embodiment 1.
[Fig. 4] Fig. 4 is a table briefly showing determinations made by the fuel cell system according to Example 1 of Embodiment 1.
[Fig. 5] Fig. 5 is a block diagram showing an example of a schematic configuration of a fuel cell system according to Example 2 of Embodiment 1.
[Fig. 6] Fig. 6 is a table briefly showing determinations made by the fuel cell system according to Example 2 of Embodiment 1.
[Fig. 7] Fig. 7 is a flowchart showing an example of a method of operating a fuel cell system according to Variation 1 of Embodiment 1.
[Fig. 8] Fig. 8 is a block diagram showing an example of a schematic configuration of a fuel cell system according to Variation 2 of Embodiment 1.
[Fig. 9] Fig. 9 is a block diagram showing an example of a schematic configuration of a fuel cell system according to Variation 3 of Embodiment 1.
[Fig. 10] Fig. 10 is a block diagram showing an example of a schematic configuration of a fuel cell system according to Variation 4 of Embodiment 1.
[Fig. 11] Fig. 11 is a block diagram showing an example of a schematic configuration of a fuel cell system according to Embodiment 2.
[Fig. 12] Fig. 12 is a flowchart showing an example of a method of operating in an initial operation step 1 according to Embodiment 2.
[Fig. 13] Fig. 13 is a flowchart showing an example of a method of operating in an initial operation step 2 according to Embodiment 2.
[Fig. 14] Fig. 14 is a flowchart showing an example of a method of operating in an initial operation step 3 according to Embodiment 2.
[Fig. 15] Fig. 15 is a flowchart showing an example of a method of operating in an initial operation step 4 according to Embodiment 2.
[Fig. 16] Fig. 16 is a flowchart showing an example of a method of operating in a cooling water/AD water draining step according to Embodiment 2.
[Fig. 17] Fig. 17 is a flowchart showing an example of a method of operating in a cooling water tank float sensor and reforming water pump determining step according to Embodiment 2.
[Fig. 18] Fig. 18 is a flowchart showing an example of a method of operating in an AD tank float sensor and AD shut-off valve determining step according to Embodiment 2.
[Fig. 19] Fig. 19 is a flowchart showing an example of a method of operating in a regular inspection step 1 according to Embodiment 2.
[Fig. 20] Fig. 20 is a flowchart showing an example of a method of operating in a regular inspection step 2 according to Embodiment 2.
[Fig. 21] Fig. 21 is a flowchart showing an example of a method of operating in a regular inspection step 3 according to Embodiment 2.

### Description of Embodiments

A fuel cell system according to a first aspect of the present invention includes: a fuel cell unit configured to generate electric power by using a fuel gas and an oxidizing gas; a first water tank configured to store at least one of condensation water, cooling water, and stored hot water, the condensation water being produced when moisture in a gas discharged from the fuel cell unit is condensed, the cooling water being used in cooling the fuel cell unit, the stored hot water being used in recovering heat from the fuel cell unit; a second water tank configured to store at least one of the condensation water, the cooling water, and the stored hot water; a first water amount sensor configured to detect an amount of water in the first water tank; a second water amount sensor configured to detect an amount of water in the second water tank; a first water moving mechanism configured to move water in the first water tank to the second water tank; and a controller configured to perform control of the first water moving mechanism. The controller performs control of the first water moving mechanism to move water from the first water tank to the second water tank, and thereafter performs an abnormality handling operation in at least one of the following cases: a case where the amount of water detected by the first water amount sensor has not decreased as compared to before starting to perform the control of the first water control mechanism; and a case where the amount of water detected by the second water amount sensor has not increased as compared to before starting to perform the control of the first water control mechanism, the abnormality handling operation including at least one of a determination operation to determine that there is an abnormality, outputting of an abnormality signal, and stopping of the system's operation.

According to the above configuration, abnormalities can be detected with a simplified configuration and improved reliability.

A fuel cell system according to a second aspect of the present invention is such that, in the fuel cell system according to the first aspect, the controller causes the system's operation to continue in a case where the amount of water detected by the first water amount sensor has decreased and the amount of water detected by the second water amount sensor has increased.

A fuel cell system according to a third aspect of the present invention is such that, in the fuel cell system according to the first or second aspect, the abnormality handling operation is the stopping of the system's operation, and the controller prohibits start-up or performs restart-up after performing the stopping of the system's operation.

A fuel cell system according to a fourth aspect of the present invention is such that, in the fuel cell system according to the first or second aspect, the abnormality handling operation is the determination operation. In the determination operation, the controller: determines that there is an abnormality in the first water amount sensor in a case where the amount of water detected by the first water amount sensor has not decreased and the amount of water detected by the second water amount sensor has increased; determines that there is an abnormality in the second water amount sensor in a case where the amount of water detected by the first water amount sensor has decreased and the amount of water detected by the second water amount sensor has not increased; and determines that there is an abnormality in the first water moving mechanism in a case where the amount of water detected by the first water amount sensor has not decreased and the amount of water detected by the second water amount sensor has not increased.

According to the above configuration, it can be determined that to which one of the first water amount sensor, the second water amount sensor, and the first water moving mechanism an abnormality has occurred. Therefore, at the time of performing, for example, maintenance work such as repairing on the fuel cell system, an operator performing the maintenance work can readily know to which component an abnormality has occurred, which makes smooth component replacement possible.

A fuel cell system according to a fifth aspect of the present invention is such that, in the fuel cell system according to any one of the first to fourth aspects, the first water tank is disposed above the second water tank with respect to a direction of gravity, and the first water moving mechanism includes: a first connection passage connecting the first water tank and the second water tank; and a first valve provided on the first connection passage.

According to the above configuration, at least one abnormality response operation from among the determination operation to determine that there is an abnormality, outputting of an abnormality signal, and stopping of the system's operation can be performed in a case where a valve is used as the first water moving mechanism.

A fuel cell system according to a sixth aspect of the present invention is such that, in the fuel cell system according to any one of the first to fourth aspects, the first water moving mechanism includes: a second connection passage connecting the first water tank and the second water tank; and a first pump provided on the second connection passage and configured to move water from the first water tank to the second water tank.

According to the above configuration, at least one abnormality response operation from among the determination operation to determine that there is an abnormality, outputting of an abnormality signal, and stopping of the system's operation can be performed in a case where a pump is used as the first water moving mechanism.

A fuel cell system according to a seventh aspect of the present invention is such that the fuel cell system according to the fifth aspect further includes a second water moving mechanism configured to move water in the second water tank to the first water tank. The second water moving mechanism includes: a third connection passage connecting the first water tank and the second water tank; and a second pump provided on the third connection passage and configured to move water from the second water tank to the first water tank. The controller performs control of using the second water moving mechanism to move water from the second water tank to the first water tank before using the first water moving mechanism to move water from the first water tank to the second water tank.

According to the above configuration, in a case where a valve is used as the first water moving mechanism, water can be moved from the second water tank to the first water tank as a preparatory operation before performing at least one abnormality response operation from among the determination operation to determine that there is an abnormality, outputting of an abnormality signal, and stopping of the system's operation.

A fuel cell system according to an eighth aspect of the present invention is such that the fuel cell system according to the sixth aspect further includes a second water moving mechanism configured to move water in the second water tank to the first water tank. The second water tank is disposed above the first water tank with respect to a direction of gravity. The second water moving mechanism includes: a fourth connection passage connecting the first water tank and the second water tank; and a second valve provided on the fourth connection passage. The controller performs control of using the second water moving mechanism to move water from the second water tank to the first water tank before using the first water moving mechanism to move water from the first water tank to the second water tank.

According to the above configuration, in a case where a pump is used as the first water moving mechanism, water can be moved from the second water tank to the first water tank as a preparatory operation before performing at least one abnormality response operation from among the determination operation to determine that there is an abnormality, outputting of an abnormality signal, and stopping of the system's operation.

A fuel cell system according to a ninth aspect of the present invention is such that, the fuel cell system according to any one of the first to eighth aspects further includes a water discharge mechanism configured to discharge water from the second water tank. The controller performs control of using the water discharge mechanism to discharge water from the second water tank before using the first water moving mechanism to move water from the first water tank to the second water tank.

According to the above configuration, water can be discharged from the second water tank as a preparatory operation before performing at least one abnormality response operation from among the determination operation to determine that there is an abnormality, outputting of an abnormality signal, and stopping of the system's operation. It should be noted that a valve or a pump may be used as the water discharge mechanism.

A fuel cell system according to a tenth aspect of the present invention is such that, in the fuel cell system according to any one of the first to ninth aspects, the fuel cell unit includes: a hydrogen generator configured to generate a hydrogen-containing fuel gas by using a raw material and water; a fuel cell configured to generate electric power by using the fuel gas and an oxidizing gas; and a combustor configured to heat the hydrogen generator by combusting at least one of the raw material, the fuel gas, and an anode exhaust gas discharged from the fuel cell. In the fuel cell system according to the tenth aspect, the condensation water is water produced when moisture in at least one of the following gases is condensed: the anode exhaust gas; a cathode exhaust gas discharged from the fuel cell; and a flue gas discharged from the combustor.

A fuel cell system according to an eleventh aspect of the present invention is such that, in the fuel cell system according to the first aspect, the abnormality handling operation is the outputting of the abnormality signal. The fuel cell system according to the eleventh aspect includes an abnormality notification device configured to give a notification of an abnormality in a case where the abnormality signal is outputted.

A method of operating a fuel cell system, according to a twelfth aspect of the present invention, includes: detecting, by a first water amount sensor, an amount of water in a first water tank configured to store at least one of condensation water, cooling water, and stored hot water, the condensation water being produced when moisture in a gas discharged from a fuel cell unit is condensed, the cooling water being used in cooling a fuel cell, the stored hot water being used in recovering heat from the fuel cell; detecting, by a second water amount sensor, an amount of water in a second water tank configured to store at least one of the condensation water, the cooling water, and the stored hot water; controlling a first water moving mechanism to move water from the first water tank to the second water tank; and thereafter performing an abnormality handling operation in at least one of the following cases: a case where the amount of water detected by the first water amount sensor has not decreased as compared to before controlling the first water moving mechanism; and a case where the amount of water detected by the second water amount sensor has not increased as compared to before controlling the first water moving mechanism, the abnormality handling operation including at least one of a determination operation to determine that there is an abnormality, outputting of an abnormality signal, and stopping of the system's operation.

According to the above configuration, abnormalities can be detected with a simplified configuration and improved reliability.

A method of operating a fuel cell system, according to a thirteenth aspect of the present invention, is such that the method of operating the fuel cell system according to the twelfth aspect further includes causing the system's operation to continue in a case where the amount of water detected by the first water amount sensor has decreased and the amount of water detected by the second water amount sensor has increased.

A method of operating a fuel cell system, according to a fourteenth aspect of the present invention, is such that in the method of operating the fuel cell system according to the twelfth aspect, the abnormality handling operation is the stopping of the system's operation, and performing the stopping of the system's operation includes prohibiting start-up or performing restart-up after stopping the system's operation.

A method of operating a fuel cell system, according to a fifteenth aspect of the present invention, is such that in the method of operating the fuel cell system according to the twelfth aspect, the abnormality handling operation is the determination operation. Performing the determination operation includes: determining that there is an abnormality in the first water amount sensor in a case where the amount of water detected by the first water amount sensor has not decreased and the amount of water detected by the second water amount sensor has increased; determining that there is an abnormality in the second water amount sensor in a case where the amount of water detected by the first water amount sensor has decreased and the amount of water detected by the second water amount sensor has not increased; and determining that there is an abnormality in the first water moving mechanism in a case where the amount of water detected by the first water amount sensor has not decreased and the amount of water detected by the second water amount sensor has not increased.

According to the above configuration, it can be determined to which one of the first water amount sensor, the second water amount sensor, and the first water moving mechanism an abnormality has occurred. Therefore, at the time of performing, for example, maintenance work such as repairing on the fuel cell system, an operator performing the maintenance work can readily know to which component an abnormality has occurred, which makes smooth component replacement possible.

A method of operating a fuel cell system, according to a sixteenth aspect of the present invention, is such that the method of operating the fuel cell system according to any one of the twelfth to fifteenth aspects further includes using a second water moving mechanism, which is configured to move water in the second water tank to the first water tank, to move water from the second water tank to the first water tank before using the first water moving mechanism to move water from the first water tank to the second water tank.

According to the above configuration, in a case where a pump is used as the first water moving mechanism, water can be moved from the second water tank to the first water tank as a preparatory operation before performing at least one abnormality response operation from among the determination operation to determine that there is an abnormality, outputting of an abnormality signal, and stopping of the system's operation.

A method of operating a fuel cell system, according to a seventeenth aspect of the present invention, is such that the method of operating the fuel cell system according to any one of the twelfth to sixteenth aspects further includes using a water discharge mechanism, which is configured to discharge water from the second water tank, to discharge water from the second water tank before using the first water moving mechanism to move water from the first water tank to the second water tank.

According to the above configuration, water can be discharged from the second water tank as a preparatory operation before performing at least one abnormality response operation from among the determination operation to determine that there is an abnormality, outputting of an abnormality signal, and stopping of the system's operation. It should be noted that a valve or a pump may be used as the water discharge mechanism.

A method of operating a fuel cell system, according to an eighteenth aspect of the present invention, is such that in the method of operating the fuel cell system according to the fourteenth aspect, the abnormality handling operation is the outputting of the abnormality signal. The method of operating the fuel cell system according to the eighteenth aspect includes giving a notification of an abnormality in a case where the abnormality signal is outputted.

Hereinafter, embodiments of the present invention are described with reference to the drawings. It should be noted that the present invention is not limited by these embodiments. Reference signs are given for illustratively indicating correspondence of embodiments and examples with the present invention, and do not mean that the configurations of the present invention are limited to the embodiments and the drawings corresponding thereto.

### (Embodiment 1)

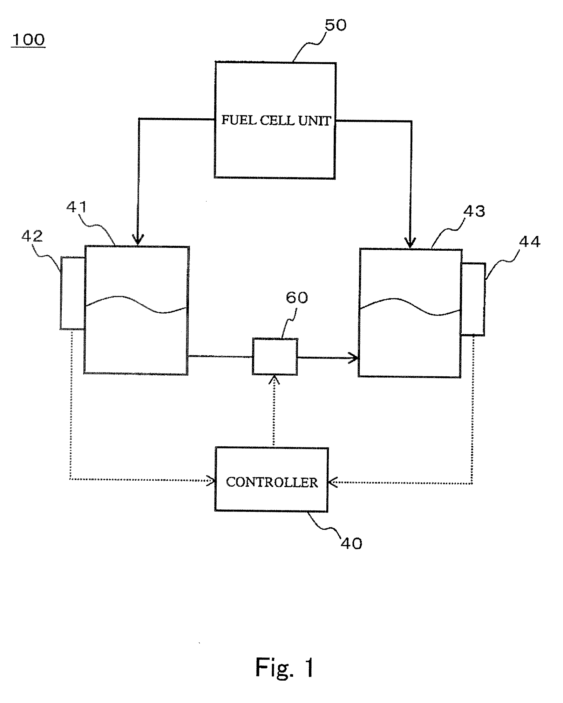

Fig. 1 is a block diagram showing an example of a schematic configuration of a fuel cell system according to Embodiment 1.

As illustratively shown in Fig. 1, a fuel cell system 100 according to the present embodiment includes: a fuel cell unit 50; a first water tank 41; a second water tank 43; a first water amount sensor 42; a second water amount sensor 44; a first water moving mechanism 60; and a controller 40.

The fuel cell unit 50 includes a fuel cell (not shown) configured to generate electric power by using a fuel gas and an oxidizing gas. For example, a polymer electrolyte fuel cell (PEFC) or a solid polymer fuel cell (SOFC) may be used as the fuel cell.

The fuel cell unit 50 may include: a hydrogen generator (not shown) configured to generate a hydrogen-containing fuel gas by using a raw material and water; the fuel cell (not shown) configured to generate electric power by using the fuel gas and the oxidizing gas; and a combustor (not shown) configured to heat the hydrogen generator by combusting at least one of the raw material, the fuel gas, and an anode exhaust gas discharged from the fuel cell. In this case, condensation water, which will be described below, may be water produced when moisture in at least one of the following gases is condensed: the anode exhaust gas; a cathode exhaust gas discharged from the fuel cell; and a flue gas discharged from the combustor.

The first water tank 41 stores at least one of the following fluids: condensation water produced when moisture in a gas discharged from the fuel cell unit 50 is condensed; cooling water for use in cooling the fuel cell unit 50; and stored hot water for use in recovering heat from the fuel cell unit 50.

Similar to the first water tank 41, the second water tank 43 stores at least one of the condensation water, the cooling water, and the stored hot water. It is preferred that, from among the condensation water, the cooling water, and the stored hot water, the second water tank 43 stores a fluid different from the fluid stored in the first water tank 41.

The first water amount sensor 42 detects the amount of water in the first water tank 41. For example, a float sensor or an electrical conductivity meter may be used as the first water amount sensor 42.

The second water amount sensor 44 detects the amount of water in the second water tank 43. For example, a float sensor or an electrical conductivity meter may be used as the second water amount sensor 44.

The first water moving mechanism 60 moves water in the first water tank 41 to the second water tank 43. For example, a pump or a valve may be used as the first water moving mechanism 60.

The controller 40 is a control device configured to perform control of the first water moving mechanism 60. The controller 40 may include, for example, a microcontroller, MPU, PLC (Programmable Logic Controller), or a logic circuit, and may additionally include a storage device such as a RAM or ROM. The controller 40 may be configured as a single controller performing centralized control, or may be configured as a group of multiple controllers performing distributed control in cooperation with each other. For example, a function of controlling the first water moving mechanism 60 and a function of performing an abnormality handling operation which will be described below may be entirely realized by a single controller. Alternatively, controllers may be provided such that each controller corresponds to a respective one of these functions. Further alternatively, in a case where these functions form combinations of functions, one or a plurality of controllers may be provided for each of these combinations.

The controller 40 is communicably connected to the first water tank 41, the first water amount sensor 42, the second water tank 43, the second water amount sensor 44, and the first water moving mechanism 60.

The controller 40 performs control of the first water moving mechanism 60 to move water from the first water tank 41 to the second water tank 43, and thereafter performs an abnormality handling operation in at least one of the following cases: a case where the amount of water detected by the first water amount sensor 42 has not decreased as compared to before starting to perform the control of the first water moving mechanism 60; and a case where the amount of water detected by the second water amount sensor 44 has not increased as compared to before starting to perform the control of the first water moving mechanism 60, the abnormality handling operation including at least one of a determination operation to determine that there is an abnormality, outputting of an abnormality signal, and stopping of the system's operation.

Any one of the aforementioned determination operation, outputting of an abnormality signal, and stopping of the system's operation may be performed as the abnormality handling operation, or any two out of these three operations may be combined and concurrently or sequentially performed, or all of these three operations may be concurrently or sequentially performed.

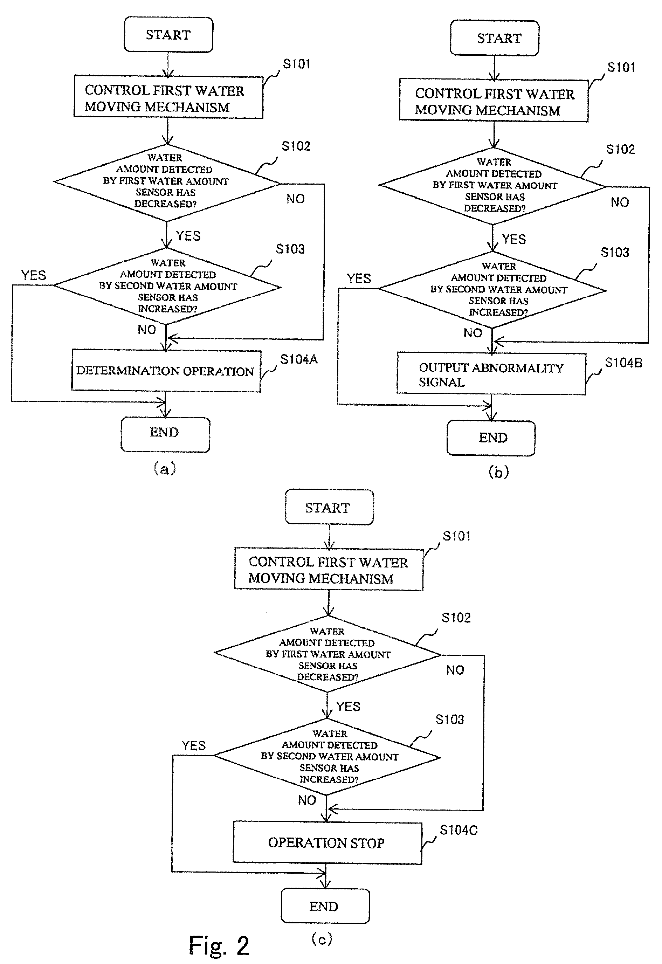

Figs. 2A to 2C are flowcharts each showing an example of a method of operating the fuel cell system according to Embodiment 1. Fig. 2A shows a case where the determination operation is performed as the abnormality handling operation; Fig. 2B shows a case where outputting of an abnormality signal is performed as the abnormality handling operation; and Fig. 2C shows a case where stopping of the system's operation is performed as the abnormality handling operation.

First, the case where the determination operation is performed as the abnormality handling operation is described with reference to Fig. 2A. When the operation is started (START), first, the controller 40 controls the first water moving mechanism 60 to move water from the first water tank 41 to the second water tank 43 (step S101).

Next, the controller 40 determines whether a detected water amount (e.g., a water level) received from the first water amount sensor 42 has decreased as compared to the detected water amount received before step S101 (step S102). In order to make it possible to perform the determination, it is preferred that the controller 40 detects the amount of water in the first water tank 41 by the first water amount sensor 42 before step S101, and stores the detected water amount.

If the determination result in step S102 is NO, it means that even though an attempt has been made to move water from the first water tank 41 to the second water tank 43, the amount of water in the first water tank 41 has not decreased due to malfunction of the first water moving mechanism 60, or means that even though water has moved from the first water tank 41 to the second water tank 43 and thereby the amount of water in the first water tank 41 has increased, the water amount detected by the first water amount sensor 42 has not decreased due to malfunction of the first water amount sensor 42. Therefore, in this case, it can be determined that there is an abnormality in at least one of the first water moving mechanism 60 and the first water amount sensor 42. Accordingly, the controller 40 performs a determination operation to determine that there is an abnormality (step S104A), and ends the operation (END). Specifically, the determination operation may be, for example, setting an abnormality flag stored in a memory of the controller 40 to ON.

If the determination result in step S102 is YES, the controller 40 determines whether a detected water amount (e.g., a water level) received from the second water amount sensor 44 has increased as compared to the detected water amount received before step S101 (step S103). In order to make it possible to perform the determination, it is preferred that the controller 40 detects the amount of water in the second water tank 43 by the second water amount sensor 44 before step S101, and stores the detected water amount.

If the determination result in step S103 is YES, the controller 40 determines that there is no abnormality, and ends the operation (END). At the time, the amount of water detected by the first water amount sensor 42 has decreased and the amount of water detected by the second water amount sensor 44 has increased. Accordingly, the controller 40 may cause the fuel cell system to continue operating.

If the determination result in step S104 is NO, it means that the amount water detected by the second water amount sensor 44 has not increased due to malfunction of the second water amount sensor 44 since it is assured from the determination result in step S102 that water has moved from the first water tank 41 to the second water tank 43. Therefore, in this case, it can be determined that there is an abnormality in the second water amount sensor 44. Accordingly, the controller 40 performs a determination operation to determine that there is an abnormality (step S104A), and ends the operation (END).

It should be noted that the meaning of "ends the operation" herein is as follows: for example, in a case where the operation shown in Fig. 2A is performed as an abnormality detection routine, the wording "ends the operation" means ending the routine, and does not necessarily mean stopping the fuel cell system 100 from operating.

It should be noted that step S102 and step S103 may be performed in a reverse order (the same is true for a case where outputting of an abnormality signal or stopping of the system's operation is performed as the abnormality handling operation). In such a case, if the amount of water detected by the second water amount sensor 44 has increased, it is determined whether the amount of water detected by the first water amount sensor 42 has decreased. Here, if the amount of water detected by the second water amount sensor 44 has not increased, or the amount of water detected by the first water amount sensor 42 has not decreased, the determination operation (step S104A) is performed.

According to the above-described operation, the controller 40 performs control of the first water moving mechanism 60 to move water from the first water tank 41 to the second water tank 43, and thereafter performs a determination operation to determine that there is an abnormality in at least one of the following cases: a case where the amount of water detected by the first water amount sensor 42 has not decreased as compared to before starting to perform the control of the first water moving mechanism 60; and a case where the amount of water detected by the second water amount sensor 44 has not increased as compared to before starting to perform the control of the first water moving mechanism 60.

Next, the case where outputting of an abnormality signal is performed as the abnormality handling operation is described with reference to Fig. 2B. It should be noted that the operation performed in this case is the same as the operation shown in Fig. 2A, except that step S104A in Fig. 2A is replaced with step S104B. Therefore, a description of common steps between Fig. 2A and Fig. 2B will be omitted.

In a case where the determination result in step S102 is NO and it can be determined that there is an abnormality in at least one of the first water moving mechanism 60 and the first water amount sensor 42, and in a case where the determination result in step S103 is NO and it can be determined that there is an abnormality in the second water amount sensor 44, the controller 40 outputs an abnormality signal (step S104B) and ends the operation (END). The abnormality signal need not be a signal detectable by a user. For example, the abnormality signal may be transmitted to a monitoring facility in a remote area, or may be transmitted to another device that performs abnormality handling. A notification of presence of an abnormality may be given when the abnormality signal has been outputted. In this case, for example, the fuel cell system may include an abnormality notification device, which is communicably connected to the controller 40 and which gives a notification of an abnormality in a case where the abnormality signal is outputted.

Next, the case where stopping of the system's operation is performed as the abnormality handling operation is described with reference to Fig. 2C. It should be noted that the operation performed in this case is the same as the operation shown in Fig. 2A, except that step S104A in Fig. 2A is replaced with step S104C. Therefore, a description of common steps between Fig. 2A and Fig. 2C will be omitted.

In a case where the determination result in step S102 is NO and it can be determined that there is an abnormality in at least one of the first water moving mechanism 60 and the first water amount sensor 42, and in a case where the determination result in step S103 is NO and it can be determined that there is an abnormality in the second water amount sensor 44, the controller 40 stops the fuel cell system 100 from operating (step S104C) and ends the operation (END). The controller 40 may prohibit start-up or may perform restart-up after stopping the fuel cell system 100 from operating. Prohibiting start-up is, for example, setting a start-up prohibiting flag stored in a memory of the controller 40 to ON, and thereafter, preventing the start-up from being performed even if a user presses a start-up switch.

### [Example 1]

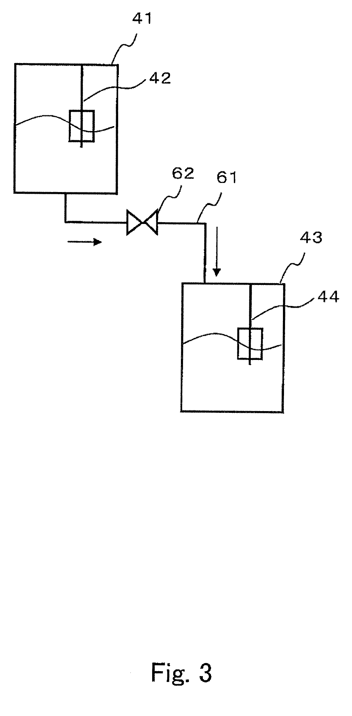

Fig. 3 is a block diagram showing an example of a schematic configuration of a main part of a fuel cell system according to Example 1 of Embodiment 1. Although not shown in Fig. 3, the fuel cell system according to Example 1 also includes the fuel cell unit 50 and the controller 40. In Example 1, components previously described with reference to Fig. 1 are denoted by the same reference signs and names as those used in Fig. 1, and a description of such components will be omitted.

In the fuel cell system according to Example 1, the first water tank 41 is disposed above the first water amount sensor 42 with respect to the direction of gravity, and the first water moving mechanism 60 includes: a first connection passage 61 connecting the first water tank 41 and the first water amount sensor 42; and a first valve 62 provided on the first connection passage 61.

It is preferred that the first connection passage 61 is provided in a manner to connect a drain outlet provided at the bottom part of the first water tank 41 and a feed-water inlet provided at the upper part of the second water tank 43.

For example, the first valve 62 is communicably connected to the controller 40, and may serve as an on-off valve or a flow rate adjusting valve, which is opened or closed through control by the controller 40. In Example 1, when the first valve 62 is opened, water in the first water tank 41 moves to the second water tank 43 due to the gravitational force.

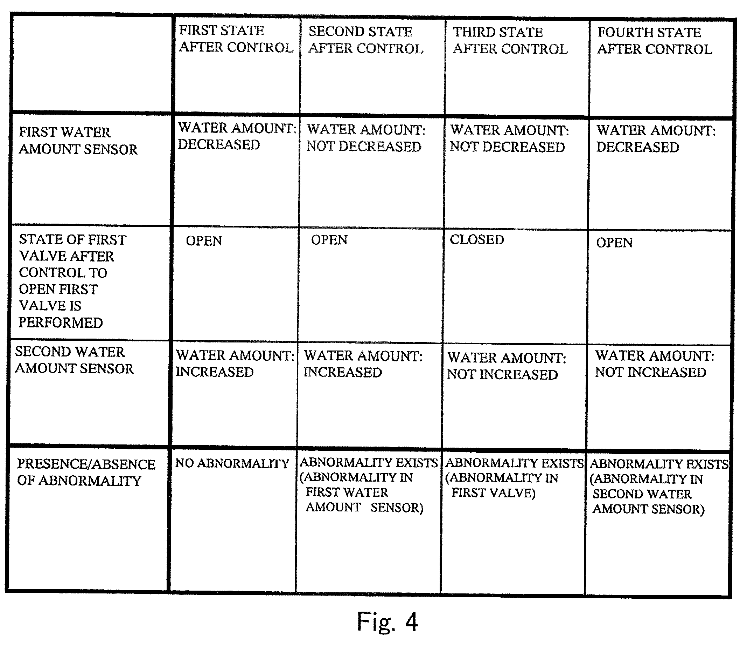

Fig. 4 is a table briefly showing determinations made by the fuel cell system according to Example 1 of Embodiment 1.

In FIRST STATE AFTER CONTROL, control has been performed to open the first valve 62, and the first valve 62 is in an opened state and water has moved from the first water tank 41 to the second water tank 43. Here, the amount of water detected by the first water amount sensor 42 has decreased as expected and the amount of water detected by the second water amount sensor 44 has increased as expected. Thus, based on the results of the detection by the first water amount sensor 42 and the second water amount sensor 44, it can be determined that there is no abnormality.

In SECOND STATE AFTER CONTROL, control has been performed to open the first valve 62, and the first valve 62 is in an opened state and water has moved from the first water tank 41 to the second water tank 43. However, the amount of water detected by the first water amount sensor 42 has not decreased as expected, whereas the amount of water detected by the second water amount sensor 44 has increased as expected. In this case, based on the results of the detection by the first water amount sensor 42 and the second water amount sensor 44, it can be determined that there is an abnormality in the first water amount sensor 42.

In THIRD STATE AFTER CONTROL, control has been performed to open the first valve 62, but the first valve 62 is still in a closed state and water has not moved from the first water tank 41 to the second water tank 43. Here, the amount of water detected by the first water amount sensor 42 has not decreased as expected, and also, the amount of water detected by the second water amount sensor 44 has not increased as expected. In this case, based on the results of the detection by the first water amount sensor 42 and the second water amount sensor 44, it can be determined that there is an abnormality in the first valve 62.

In FOURTH STATE AFTER CONTROL, control has been performed to open the first valve 62, and the first valve 62 is in an opened state and water has moved from the first water tank 41 to the second water tank 43. Here, the amount of water detected by the first water amount sensor 42 has decreased as expected, but the amount of water detected by the second water amount sensor 44 has not increased as expected. In this case, based on the results of the detection by the first water amount sensor 42 and the second water amount sensor 44, it can be determined that there is an abnormality in the second water amount sensor 44.

Also in Example 1, other than the determination operation, outputting of an abnormality signal or stopping of the system's operation may be performed as the abnormality handling operation, or any operations among these three operations may be combined and concurrently or sequentially performed as the abnormality handling operation.

In Example 1, at least one abnormality response operation from among the determination operation to determine that there is an abnormality, outputting of an abnormality signal, and stopping of the system's operation can be performed in a case where a valve is used as the first water moving mechanism.

### [Example 2]

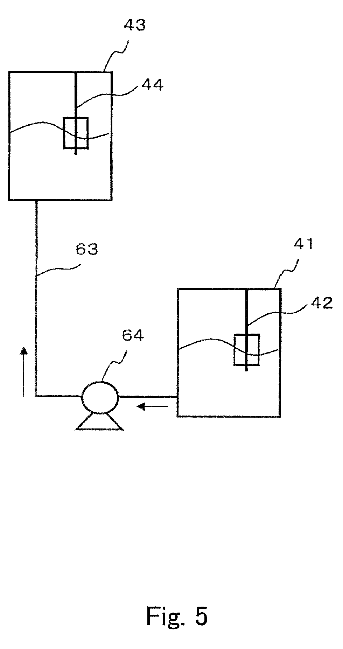

Fig. 5 is a block diagram showing an example of a schematic configuration of a main part of a fuel cell system according to Example 2 of Embodiment 1. Although not shown in Fig. 5, the fuel cell system according to Example 2 also includes the fuel cell unit 50 and the controller 40. In Example 2, components previously described with reference to Fig. 1 are denoted by the same reference signs and names as those used in Fig. 1, and a description of such components will be omitted.

In the fuel cell system according to Example 2, the first water moving mechanism 60 includes: a second connection passage 63 connecting the first water tank 41 and the first water amount sensor 42; and a first pump 64 provided on the second connection passage 63 and configured to move water from the first water tank 41 to the second water tank 43.

It is preferred that the second connection passage 63 is provided in a manner to connect the drain outlet provided at the bottom part of the first water tank 41 and the feed-water inlet provided at the upper part of the second water tank 43.

For example, the first pump 64 is communicably connected to the controller 40, and may be operated through control by the controller 40. In Example 2, when the first pump 64 is driven, water in the first water tank 41 moves to the second water tank 43. According to this configuration, even in a case where the first water tank 41 is disposed below the second water tank 43 with respect to the direction of gravity, water can be moved from the first water tank 41 to the second water tank 43 against the gravitational force.

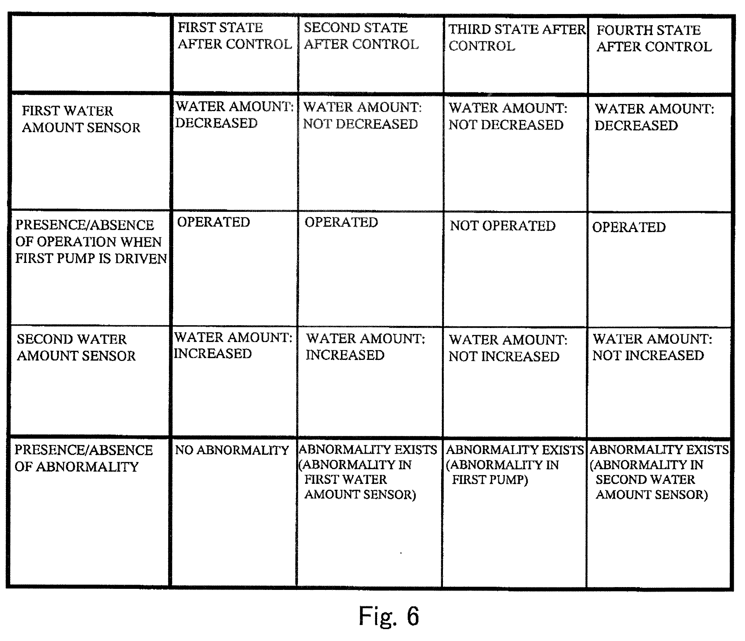

Fig. 6 is a table briefly showing determinations made by the fuel cell system according to Example 2 of Embodiment 1.

In FIRST STATE AFTER CONTROL, the first pump 64 has been driven, and the first pump 64 has actually operated and water has moved from the first water tank 41 to the second water tank 43. Here, the amount of water detected by the first water amount sensor 42 has decreased as expected and the amount of water detected by the second water amount sensor 44 has increased as expected. Thus, based on the results of the detection by the first water amount sensor 42 and the second water amount sensor 44, it can be determined that there is no abnormality.

In SECOND STATE AFTER CONTROL, the first pump 64 has been driven, and the first pump 64 has actually operated and water has moved from the first water tank 41 to the second water tank 43. However, the amount of water detected by the first water amount sensor 42 has not decreased as expected, whereas the amount of water detected by the second water amount sensor 44 has increased as expected. In this case, based on the results of the detection by the first water amount sensor 42 and the second water amount sensor 44, it can be determined that there is an abnormality in the first water amount sensor 42.

In THIRD STATE AFTER CONTROL, control has been performed to drive the first pump 64, but the first pump 64 has not actually operated and water has not moved from the first water tank 41 to the second water tank 43. Here, the amount of water detected by the first water amount sensor 42 has not decreased as expected, and also, the amount of water detected by the second water amount sensor 44 has not increased as expected. In this case, based on the results of the detection by the first water amount sensor 42 and the second water amount sensor 44, it can be determined that there is an abnormality in the first valve 62.

In FOURTH STATE AFTER CONTROL, the first pump 64 has been driven, and the first pump 64 has actually operated and water has moved from the first water tank 41 to the second water tank 43. Here, the amount of water detected by the first water amount sensor 42 has decreased as expected, but the amount of water detected by the second water amount sensor 44 has not increased as expected. In this case, based on the results of the detection by the first water amount sensor 42 and the second water amount sensor 44, it can be determined that there is an abnormality in the second water amount sensor 44.

Also in Example 2, other than the determination operation, outputting of an abnormality signal or stopping of the system's operation may be performed as the abnormality handling operation, or any operations among these three operations may be combined and concurrently or sequentially performed as the abnormality handling operation.

In Example 2, at least one abnormality response operation from among the determination operation to determine that there is an abnormality, outputting of an abnormality signal, and stopping of the system's operation can be performed in a case where a pump is used as the first water moving mechanism.

### [Variation 1]

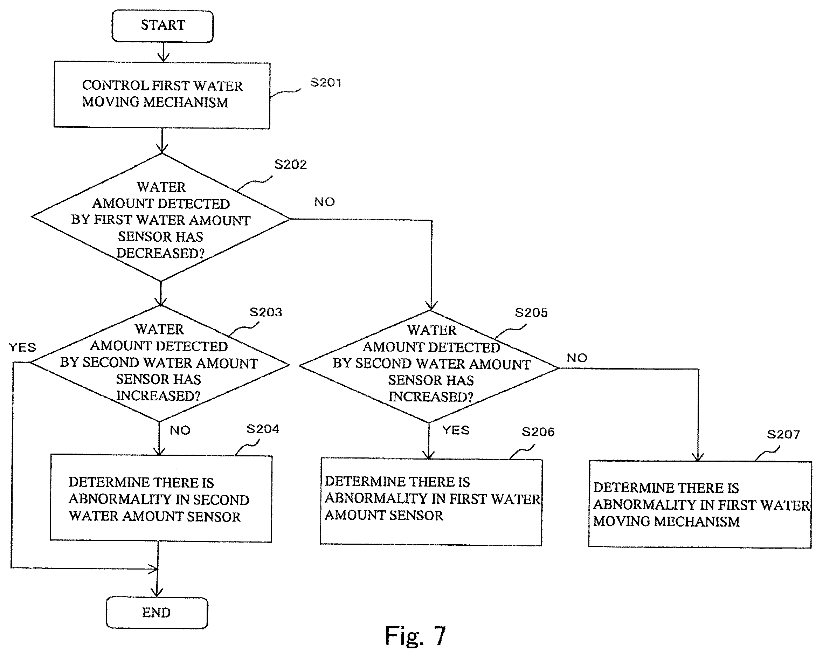

Fig. 7 is a flowchart showing an example of a method of operating a fuel cell system according to Variation 1 of Embodiment 1.

In the fuel cell system according to Variation 1, the abnormality handling operation is the determination operation. In the determination operation, the controller 40: determines that there is an abnormality in the first water amount sensor 42 in a case where the amount of water detected by the first water amount sensor 42 has not decreased and the amount of water detected by the second water amount sensor 44 has increased; determines that there is an abnormality in the second water amount sensor 44 in a case where the amount of water detected by the first water amount sensor 42 has decreased and the amount of water detected by the second water amount sensor 44 has not increased; and determines that there is an abnormality in the first water moving mechanism 60 in a case where the amount of water detected by the first water amount sensor 42 has not decreased and the amount of water detected by the second water amount sensor 44 has not increased.

In the method of operating the fuel cell system according to Variation 1, the abnormality handling operation is the determination operation. Performing the determination operation includes: determining that there is an abnormality in the first water amount sensor 42 in a case where the amount of water detected by the first water amount sensor 42 has not decreased and the amount of water detected by the second water amount sensor 44 has increased; determining that there is an abnormality in the second water amount sensor 44 in a case where the amount of water detected by the first water amount sensor 42 has decreased and the amount of water detected by the second water amount sensor 44 has not increased; and determining that there is an abnormality in the first water moving mechanism 60 in a case where the amount of water detected by the first water amount sensor 42 has not decreased and the amount of water detected by the second water amount sensor 44 has not increased.

The above determinations may be performed in the manner described with reference to Fig. 4 of Example 1 and also in the manner described with reference to Fig. 6 of Example 2.

Since the hardware configuration according to Variation 1 can be made the same as any of the hardware configurations according to Embodiment 1 and the examples and variations thereof, a detailed description of the hardware configuration is omitted.

Hereinafter, the operation of the fuel cell system according to Variation 1 is described with reference to Fig. 7.

When the operation starts (START), first, the controller 40 controls the first water moving mechanism 60 to move water from the first water tank 41 to the second water tank 43 (step S201).

Next, the controller 40 determines whether a detected water amount (e.g., a water level) received from the first water amount sensor 42 has decreased as compared to the detected water amount received before step S201 (step S202). In order to make it possible to perform the determination, it is preferred that the controller 40 stores the detected water amount that is received before step S201 from the first water amount sensor 42.

If the determination result in step S202 is YES, the controller 40 determines whether a detected water amount (e.g., a water level) received from the second water amount sensor 44 has increased as compared to the detected water amount received before step S201 (step S203).

If the determination result in step S203 is YES, the controller 40 determines that there is no abnormality as shown in, for example, FIRST STATE AFTER CONTROL in Fig. 4 or Fig. 6, and ends the operation (END).

If the determination result in step S203 is NO, the controller 40 determines that there is an abnormality in the second water amount sensor 44 as shown in, for example, FOURTH STATE AFTER CONTROL in Fig. 4 or Fig. 6 (step S204), and sets a flag indicating the presence of the abnormality. Then, the controller 40 ends the operation (END).

If the determination result in step S202 is NO, the controller 40 determines whether a detected water amount (e.g., a water level) received from the second water amount sensor 44 has increased as compared to the detected water amount received before step S201 (step S205).

If the determination result in step S205 is YES, the controller 40 determines that there is an abnormality in the first water amount sensor 42 as shown in, for example, SECOND STATE AFTER CONTROL in Fig. 4 or Fig. 6 (step S206), and sets a flag indicating the presence of the abnormality. Then, the controller 40 ends the operation (END).

If the determination result in step S206 is YES, the controller 40 determines that there is an abnormality in the first water moving mechanism 60 as shown in, for example, THIRD STATE AFTER CONTROL in Fig. 4 or Fig. 6 (step S206), and sets a flag indicating the presence of the abnormality. Then, the controller 40 ends the operation (END).

According to Variation 1, it can be determined to which one of the first water amount sensor, the second water amount sensor, and the first water moving mechanism an abnormality has occurred. Therefore, at the time of performing, for example, maintenance work such as repairing on the fuel cell system, an operator performing the maintenance work can readily know to which component the abnormality has occurred, which makes smooth component replacement possible.

Although in the above-described example the determination operation is performed, outputting of an abnormality signal and/or stopping of the system's operation may be performed at the same time as the determination operation. Alternatively, outputting of an abnormality signal and/or stopping of the system's operation in addition to the determination operation may be performed sequentially.

It should be noted that the determination as to whether the amount of water detected by the first water amount sensor 42 has decreased, and the determination as to whether the amount of water detected by the second water amount sensor 44 has increased, may be performed in a reverse order.

### [Variation 2]

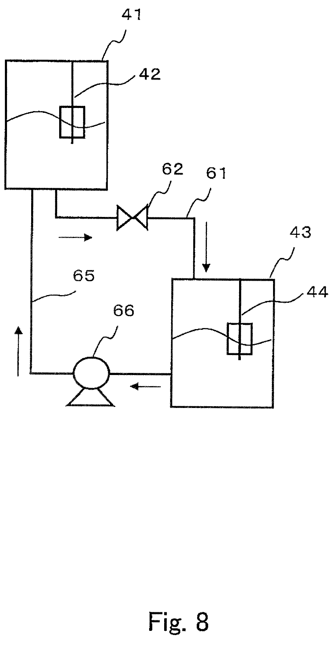

Fig. 8 is a block diagram showing an example of a schematic configuration of a fuel cell system according to Variation 2 of Embodiment 1.

The fuel cell system according to Variation 2 is such that the fuel cell system according to Example 1 further includes a second water moving mechanism configured to move water in the second water tank 43 to the first water tank 41. The second water moving mechanism includes: a third connection passage 65 connecting the first water tank 41 and the second water tank 43; and a second pump 66 provided on the third connection passage 65 and configured to move water from the second water tank 43 to the first water tank 41. The controller 40 performs control of using the second water moving mechanism (the third connection passage 65 and the second pump 66) to move water from the second water tank 43 to the first water tank 41 before using the first water moving mechanism 60 (the first connection passage 61 and the first valve 62) to move water from the first water tank 41 to the second water tank 43.

A method of operating the fuel cell system according to Variation 2 is such that the method of operating the fuel cell system according to Example 1 further includes using the second water moving mechanism (the third connection passage 65 and the second pump 66), which is configured to move water in the second water tank 43 to the first water tank 41, to move water from the second water tank 43 to the first water tank 41 before using the first water moving mechanism 60 to move water from the first water tank 41 to the second water tank 43.

It is preferred that the third connection passage 65 is provided in a manner to connect a drain outlet provided at the bottom part of the second water tank 43 and a feed-water inlet provided at the upper part of the first water tank 41.

For example, the second pump 66 is communicably connected to the controller 40, and may be operated through control by the controller 40. In Variation 2, when the second pump 66 is driven, water in the second water tank 43 moves to the first water tank 41. According to this configuration, even in a case where the second water tank 43 is disposed below the first water tank 41 with respect to the direction of gravity, water can be moved from the second water tank 43 to the first water tank 41 against the gravitational force.

In Variation 2, in a case where a valve is used as the first water moving mechanism, water can be moved from the second water tank to the first water tank as a preparatory operation before performing at least one abnormality response operation from among the determination operation to determine that there is an abnormality, outputting of an abnormality signal, and stopping of the system's operation.

### [Variation 3]

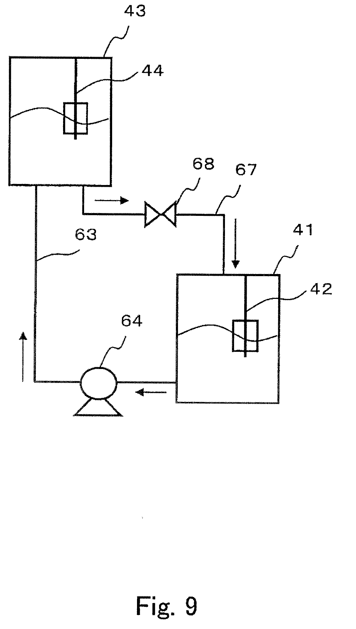

Fig. 9 is a block diagram showing an example of a schematic configuration of a fuel cell system according to Variation 3 of Embodiment 1.

The fuel cell system according to Variation 3 is such that the fuel cell system according to Example 2 further includes a second water moving mechanism configured to move water in the second water tank 43 to the first water tank 41. The second water tank 43 is disposed above the first water tank 41 with respect to the direction of gravity. The second water moving mechanism includes: a fourth connection passage 67 connecting the first water tank 41 and the second water tank 43; and a second valve 68 provided on the fourth connection passage 67. The controller 40 performs control of using the second water moving mechanism (the fourth connection passage 67 and the second valve 68) to move water from the second water tank 43 to the first water tank 41 before using the first water moving mechanism 60 (the second connection passage 63 and the first pump 64) to move water from the first water tank 41 to the second water tank 43.

A method of operating the fuel cell system according to Variation 3 is such that the method of operating the fuel cell system according to Example 2 further includes using the second water moving mechanism (the fourth connection passage 67 and the second valve 68), which is configured to move water in the second water tank 43 to the first water tank 41, to move water from the second water tank 43 to the first water tank 41 before using the first water moving mechanism 60 to move water from the first water tank 41 to the second water tank 43.

It is preferred that the fourth connection passage 67 is provided in a manner to connect the drain outlet provided at the bottom part of the second water tank 43 and the feed-water inlet provided at the upper part of the first water tank 41.

For example, the second valve 68 is communicably connected to the controller 40, and may serve as an on-off valve or a flow rate adjusting valve, which is opened or closed through control by the controller 40. In Variation 3, when the second valve 68 is opened, water in the second water tank 43 moves to the first water tank 41 due to the gravitational force.

In Variation 3, in a case where a pump is used as the first water moving mechanism, water can be moved from the second water tank to the first water tank as a preparatory operation before performing at least one abnormality response operation from among the determination operation to determine that there is an abnormality, outputting of an abnormality signal, and stopping of the system's operation.

### [Variation 4]

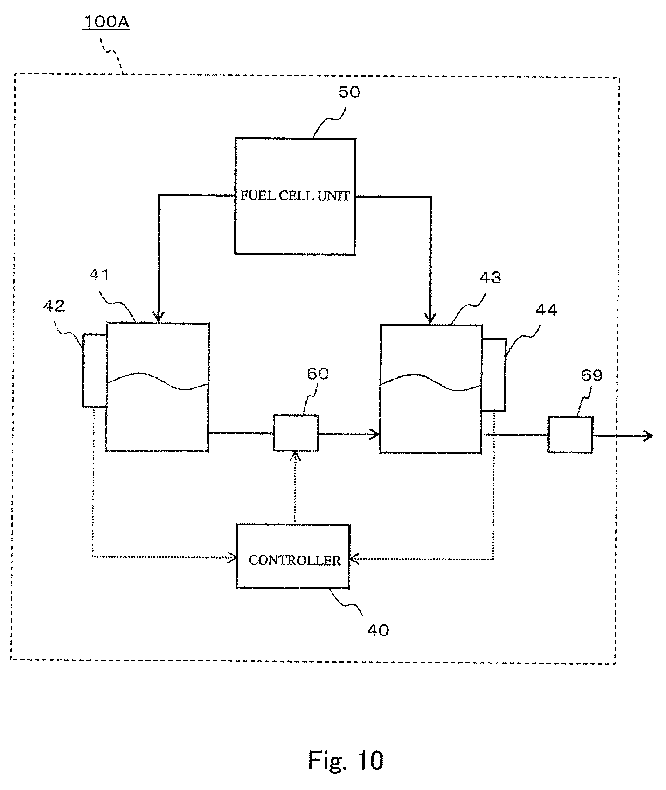

Fig. 10 is a block diagram showing an example of a schematic configuration of a fuel cell system according to Variation 4 of Embodiment 1.

A fuel cell system 100A according to Variation 4 is such that the fuel cell system according to Embodiment 1 further includes a water discharge mechanism 69 configured to discharge water from the second water tank. The controller 40 performs control of using the water discharge mechanism 69 to discharge water from the second water tank 43 before using the water discharge mechanism to move water from the first water tank 41 to the second water tank 43.

A method of operating the fuel cell system according to Variation 4 is such that the method of operating the fuel cell system according to any one of the above-described examples and variations further includes using the water discharge mechanism 69, which is configured to discharge water from the second water tank 43, to discharge water from the second water tank 43 before using the first water moving mechanism 60 to move water from the first water tank 41 to the second water tank 43.

The fuel cell system 100A may include water storing means other than the first water tank 41 and the second water tank 43, and the water discharge mechanism 69 may be configured to discharge water into the water storing means. However, it is preferred that the water discharge mechanism 69 is configured to discharge water in the second water tank 43 to the outside of the fuel cell system 100A.

For example, the water discharge mechanism 69 includes: a drain outlet provided at the lower part of the second water tank 43; a passage open to the outside of the fuel cell system 100A; and a valve (e.g., an on-off valve, a flow rate adjusting valve) or a pump provided on the passage. For example, the water discharge mechanism 69 is communicably connected to the controller 40, and discharges water in the second water tank 43 to the outside of the second water tank 43 based on control by the controller 40.

Variation 4 may be combined with Examples 1 and 2 and Variations 1 to 3.

In Variation 4, water in the second water tank can be discharged to the outside of the second water tank, and more preferably to the outside of the fuel cell system, as a preparatory operation before performing at least one abnormality response operation from among the determination operation to determine that there is an abnormality, outputting of an abnormality signal, and stopping of the system's operation.

### (Embodiment 2)

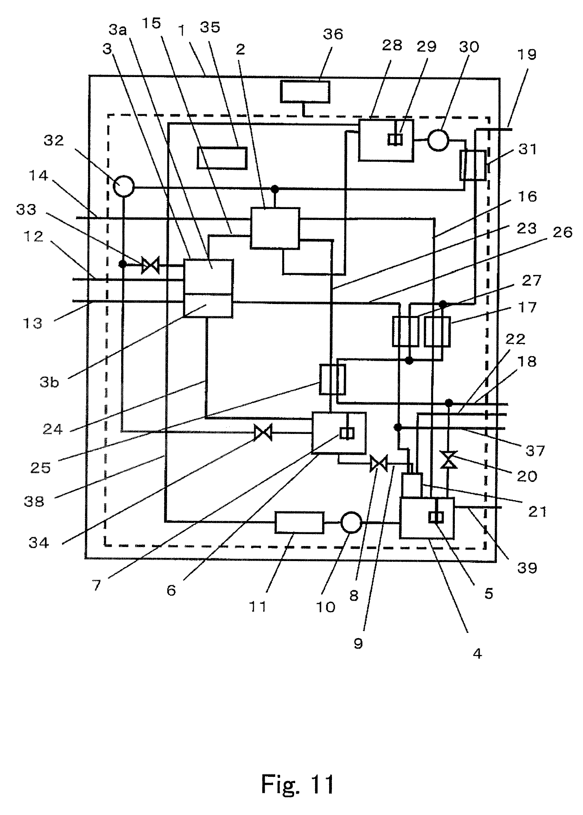

Fig. 11 is a block diagram showing an example of a schematic configuration of a fuel cell system according to Embodiment 2. As shown in Fig. 11, a fuel cell power generator 1 (fuel cell system) includes: a cell stack 2 (fuel cell) configured to generate electric power by using a fuel gas and an oxidizing gas containing at least oxygen; a hydrogen generator 3 configured to generate a hydrogen-containing fuel gas from a raw material and water; a condensation water tank 4 configured to store water that is produced when moisture in air having passed through the cell stack and moisture in air discharged from the fuel generator are condensed; a condensation water tank float sensor 5 serving as a condensation water amount sensor detecting the amount of water in the condensation water tank 4; an AD shut-off valve disposed within an AD pipe 9 and serving as condensation water supply means supplying water to the condensation water tank 4; a water supply valve 20 configured to introduce water from the outside of the fuel cell power generator 1 and serving as another condensation water supply means supplying water to the condensation water tank; a cooling water supply pump 10 serving as condensation water discharge means discharging water from the condensation water tank 4; and a controller 36.

Air as the oxidizing gas containing at least oxygen is supplied from the outside of the fuel cell power generator 1 to the cell stack 2 through a cathode air pipe 14. Oxygen in the cathode air is partially or entirely consumed when the cell stack 2 generates electric power, and exhaust cathode air which remains after the oxygen in the cathode air is partially or entirely consumed is guided to an exhaust cathode air heat exchanger 17 through an exhaust cathode air pipe 16. The exhaust cathode air contains a large amount of moisture. Therefore, when heat is taken from the exhaust cathode air at the exhaust cathode air heat exchanger 17 and thereby the temperature of the exhaust cathode air is reduced, the moisture in the exhaust cathode air is condensed and water is produced. The condensation water and the exhaust cathode air are guided to the condensation water tank 4 (cathode condensation water tank). Then, the condensation water is stored in the condensation water tank 4, and the gas component is, after passing through a gas-liquid contact part 21 provided at the condensation water tank 4, discharged to the outside of the fuel cell power generator 1 through a cathode exhaust gas pipe 22.

A material that contains water within its molecules, such as a hydrocarbon, is guided as a raw material from the outside of the fuel cell power generator 1 to a reformer 3a of the hydrogen generator 3 through a raw material pipe 12. Hydrocarbons such as methane, ethane, and propane, which are in the form of gas at ordinary temperatures, as well as hydrocarbons such as kerosene and petroleum, which are in the form of liquid at ordinary temperatures, may be used as a raw material. In the present embodiment, city gas 13A is used as a raw material. A hydrogen-containing fuel gas is generated in the reformer 3a of the hydrogen generator 3 through a reaction between the raw material and water supplied to the reformer 3a. The fuel generated in the hydrogen generator 3 is sent to the cell stack 2 through a fuel gas pipe 15. The cell stack 2 generates electrical energy, thermal energy, and water by using hydrogen in the fuel and oxygen in the oxidizing gas. An off gas that remains after the hydrogen in the fuel gas is partially used in the cell stack 2 is guided to an AD heat exchanger 25 through an off gas pipe 23. Since heat is taken from the off gas at the AD heat exchanger 25 and thereby the temperature of the off gas is reduced, moisture contained in the off gas is condensed and water is produced. The off gas containing the condensation water is guided to an AD tank 6 (anode condensation water tank).

The condensed moisture is stored in the AD tank 6, and the off gas is guided to a burner 3b in the hydrogen generator 3 through an AD pipe 24. In the burner 3b, air that is directly taken from the outside of the fuel cell power generator 1 and supplied to the burner 3b through a combustion air pipe 13, or external air that has entered the inside of the fuel cell power generator 1 and thereafter taken from the inside of the fuel cell power generator 1 and supplied to the burner 3b, is mixed with the off gas, and the mixture of the air and off gas is combusted. Heat that is generated during the combustion is partially utilized as heat for a hydrogen-generating reaction between the raw material and water. A flue gas containing heat that has not been utilized as heat for the reaction is guided to a flue gas heat exchanger 27 through a flue gas pipe 26. At the flue gas heat exchanger 27, heat is taken from the flue gas. As a result, the temperature of the flue gas is reduced and moisture in the flue gas is condensed. The flue gas, the moisture of which has been condensed, is guided to the outside of the fuel cell power generator 1 through a flue gas exhaust pipe 37. The condensation water produced from the flue gas is guided to the gas-liquid contact part 21 provided at the condensation water tank 4. The pH of the condensation water produced from the flue gas is acid since the flue gas contains a large amount of carbon dioxide generated at the time of combustion.

The condensation water comes into contact with oncoming exhaust cathode air at the gas-liquid contact part 21. Carbon dioxide contained in the flue gas is transferred to the exhaust cathode air, the carbon dioxide concentration of which is low. As a result, the concentration of carbon dioxide gas in the condensation water produced from the flue gas decreases, and the pH increases toward neutrality.

The condensation water tank 4 is provided with the condensation water tank float sensor 5 as a condensation water amount sensor. The cooling water supply pump 10 is connected to the condensation water tank 4 as condensation water discharge means. The cooling water supply pump 10 takes water out of the condensation water tank 4 in accordance with, for example, a signal from the controller 36. The water taken out of the condensation water tank 4 passes through a water purifier which removes particles, ions, and bacteria from the water, and thereafter, the water is supplied to a cooling water tank 28 through a cooling water supply pipe 38. Cooling water supply means may be provided separately from the condensation water discharge means. However, in the present embodiment, the cooling water supply pump 10 is used not only as condensation water discharge means but also as cooling water supply means. The cooling water tank 28 is provided with a cooling water tank float sensor 29 serving as a cooling water amount sensor.

The cooling water in the cooling water tank 28 is pumped up from the cooling water tank 28 by a cooling water circulation pump 30, and is flowed to a cooling water heat exchanger 31. Since heat is taken from the cooling water at the cooling water heat exchanger, the temperature of the cooling water becomes a suitable temperature. It should be noted that the flow rate of stored hot water to which heat is transferred at the cooling water heat exchanger is controlled such that the temperature of the cooling water becomes a suitable temperature. In this manner, the temperature of the cooling water is suitably controlled. The cooling water in such a suitable temperature is flowed to the cell stack 2. The cell stack 2 generates heat when generating electric power. Therefore, the temperature of the cell stack is suitably controlled by flowing a suitable amount of cooling water in a suitable temperature to the cell stack.

It should be noted that the heat generated by the cell stack 2 varies depending on, for example, the amount of electric power generated by the cell stack 2. For this reason, it is necessary to vary the amount of heat taken from the cell stack 2. The amount of heat to be taken from the cell stack 2 is varied by controlling the operating amount of the cooling water circulation pump 30. A passage for guiding water to a reforming water pump 32 is formed in a manner to branch off from a passage through which the cooling water circulates between the cooling water tank 28 and the cell stack 2. The reforming water pump 32 guides the cooling water to the hydrogen generator 3 via a reforming water valve 33. A discharge passage for the reforming water pump 32 includes a passage that leads to the AD tank 6 via an AD valve 34 in addition to a passage that leads to the hydrogen generator 3 via the reforming water valve 33. When the reforming water pump 32 is operated and the AD valve 34 is opened, the water in the cooling water tank 28 is sent to the AD tank 6, accordingly.

Cooling water discharge means and AD tank water supply means may be provided independent of each other. However, in the present embodiment, the reforming water pump 32 is used as both cooling water discharge means and AD water supply means. Accordingly, various different roles can be fulfilled by a small number of components, and thus a highly reliable fuel cell power generator can be realized. The AD tank 6 is disposed above the condensation water tank 4, and water in the AD tank 6 is guided to the condensation water tank 4 through the AD pipe 9 provided with an AD shut-off valve 8. The AD shut-off valve serves as both condensation water supply means and AD water discharge means. The AD tank 6 stores the condensation water produced from the off gas. Since the fuel gas generated from the raw material contains carbon dioxide in addition to hydrogen, the pH of the condensation water produced from the off gas is low due to the carbon dioxide gas. The condensation water passes through the gas-liquid contact part 21 while being guided from the AD tank 6 to the condensation water tank 4. At the time, the condensation water comes into contact with the exhaust cathode air. Accordingly, carbon dioxide in the condensation water is transferred to the exhaust cathode air, and thus removed from the condensation water. As a result, the concentration of carbon dioxide gas in the condensation water decreases, and the pH becomes close to neutrality. Then, the condensation water in such a state is stored in the condensation water tank 4. If the amount of water supplied to the condensation water tank 4 is greater than the amount of water discharged from the condensation water tank 4, the excessive water is discharged to the outside of the fuel cell power generator 1 through a condensation water drain pipe 39. In the case of using the electric power generated by the fuel cell power generator 1, DC power generated in the cell stack 2 is sent to a power circuit 35 where the DC power is converted into AC power or the voltage of the DC power is adjusted to an intended voltage for use. Thereafter, the electric power is sent to the outside of the fuel cell power generator 1 and used. In the case of using the heat generated by the fuel cell power generator 1, water is supplied from the outside of the fuel cell power generator 1 through a stored hot water inlet pipe 18; the water passes through the AD heat exchanger 25, then passes through the exhaust cathode air heat exchanger 17 or the flue gas heat exchanger 27, and passes through the cooling water heat exchanger 31, such that the temperature of the water increases each time the water passes through a respective one of these heat exchangers; and consequently, the water becomes high-temperature hot water and is guided through a stored hot water outlet pipe to the outside of the fuel cell power generator 1 and then used for hot water supply, for example.

Next, the operation of the fuel cell system according to the present embodiment is described. It should be noted that although there is a case where two components fail at the same time, such a possibility is very low since it is a product of the possibility of failure of one component and the possibility of failure of the other component. Therefore, a description is given below assuming that two components will not fail at the same time. When the fuel cell power generator 1 is operated for the first time, an initial operation step 1 is performed.

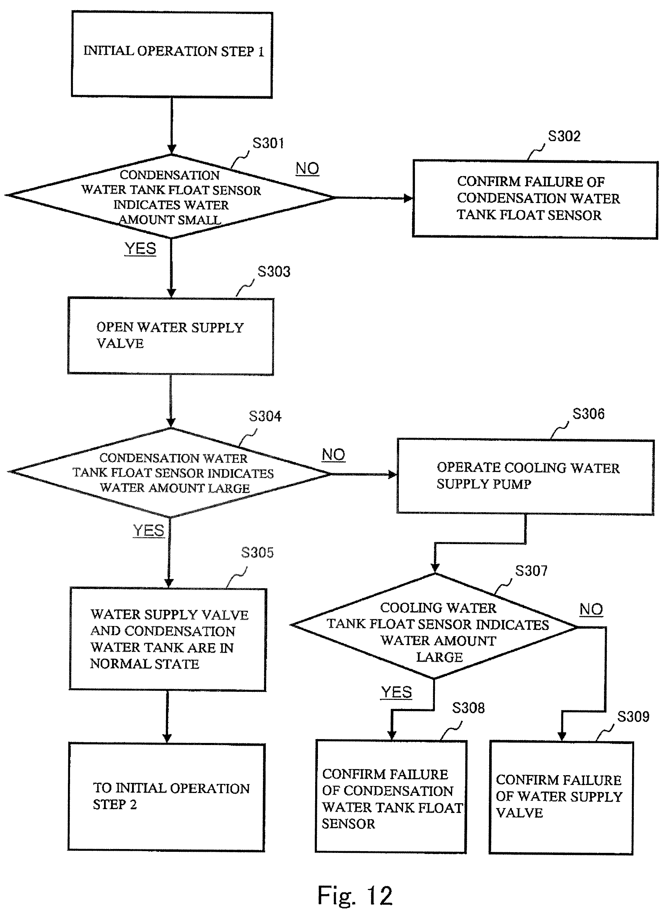

First, the initial operation step 1 according to the present embodiment is described based on Fig. 12. Fig. 12 is a flowchart showing an example of a method of operating in the initial operation step 1 according to Embodiment 2. In the initial state, there is no water in the condensation water tank 4, and the condensation water tank float sensor 5 should indicate the water amount being small (step S301). Here, if the condensation water tank float sensor 5 indicates the water amount being large, the controller 36 can determine that the condensation water tank float sensor 5 is failed and confirms the failure (step S302). Next, the controller 36 opens the water supply valve 20, and thereby water is supplied to the condensation water tank 4 from the outside (step S303). In a case where the design water amount of the condensation water tank 4, at or above which amount the condensation water tank float sensor 5 indicates the water amount being large, is G2 liters, if the design flow rate of water supplied from the water supply valve 20 is KBV liters/min, then the condensation water tank float sensor 5 should indicate the water amount being large in (G2/KBV) minutes. If the condensation water tank float sensor 5 indicates the water amount being large in (G2/KBV) minutes (YES in step S304), the controller 36 determines that the water supply valve 20 and the condensation water tank float sensor 5 are in a normal state (step S305), and the operation proceeds to an initial operation step 2. In a case where the condensation water tank float sensor 5 does not indicate the water amount being large even if a period longer than (G2/KYV) minutes has elapsed (NO in step S304), the controller 36 determines that either the water supply valve 20 or the condensation water tank float sensor 5 is failed. In this case, the cooling water supply pump 10 is operated (step S306). Since no water is stored also in the cooling water tank 28 in the initial state, the cooling water tank float sensor 29 indicates the water amount being small in the initial state. After the cooling water supply pump 10 starts to be operated, if the cooling water tank float sensor 29 indicates the water amount being large (YES in step S307), it means that water was stored in the condensation water tank 4. Accordingly, it can be confirmed that the water supply valve 20 is in a normal state and the condensation water tank float sensor 5 is failed (step S308). Even after the cooling water supply pump 10 starts to be operated, if the cooling water tank float sensor 29 does not indicate the water amount being large (when a predetermined period has elapsed), then it can be confirmed that the water supply valve 20 is failed (step S309). Accordingly, such an operation as electric power generation may be stopped or a failure notification may be given so that no other components will be damaged and prompt addressing of the failure can be facilitated. Thus, a highly reliable fuel cell power generator can be realized.

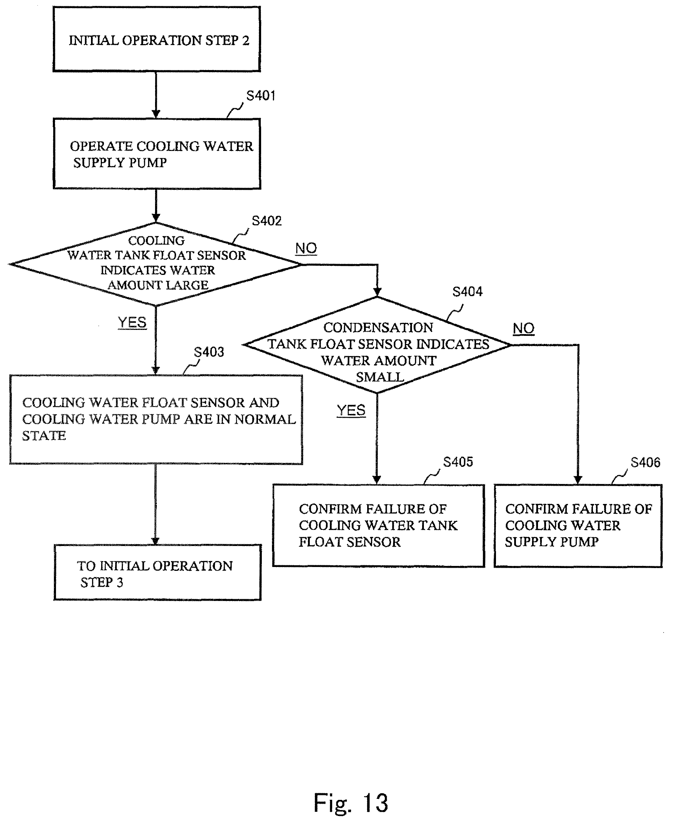

Next, the initial operation step 2 is described based on Fig. 13. Fig. 13 is a flowchart showing an example of a method of operating in the initial operation step 2 according to Embodiment 2. At first, the cooling water supply pump 10 is operated and thereby water is fed into the cooling water tank 28 (step S401). In a case where the design water amount of the cooling water tank 28, at or above which amount the cooling water tank float sensor 29 provided at the cooling water tank 28 indicates the water amount being large, is R2 liters, if the design flow rate of water supplied from the cooling water supply pump 10 is RKV liters/min, then the cooling water tank float sensor 29 should indicate the water amount being large in (R2/RKV) minutes. In a case where the cooling water float sensor 29 indicates the water amount being large in (R2/RKV) minutes (YES in step S402), since the indication of the water amount being large by the cooling water tank float sensor 29 means that the water has been supplied properly, it can be determined that the cooling water tank float sensor 29 and the cooling water supply pump 10 are both in a normal state (step S403). Accordingly, the operation proceeds to an initial operation step 3. In a case where the cooling water tank float sensor 29 does not indicate the water amount being large even if a period longer than (R2/RKV) minutes has elapsed (NO in step S402), it is determined that either the cooling water tank float sensor 29 or the cooling water supply pump 10 is failed. In this case, if the condensation water tank float sensor 5 indicates the water amount being small (YES in step S404), it means that water has been taken out of the condensation water tank 4. Accordingly, it can be determined that the cooling water supply pump 10 is in a normal state. Therefore, it is confirmed that the cooling water tank float sensor 29 is failed (step S405). On the other hand, if the condensation water tank float sensor 5 does not indicate the water amount being small (NO in step S404), it means that water has not been taken out of the condensation water tank 4. Therefore, it is confirmed that the cooling water supply pump 10 is failed (step S406). Accordingly, such an operation as electric power generation may be stopped or a failure notification may be given so that no other components will be damaged and prompt addressing of the failure can be facilitated. Thus, a highly reliable fuel cell power generator can be realized.

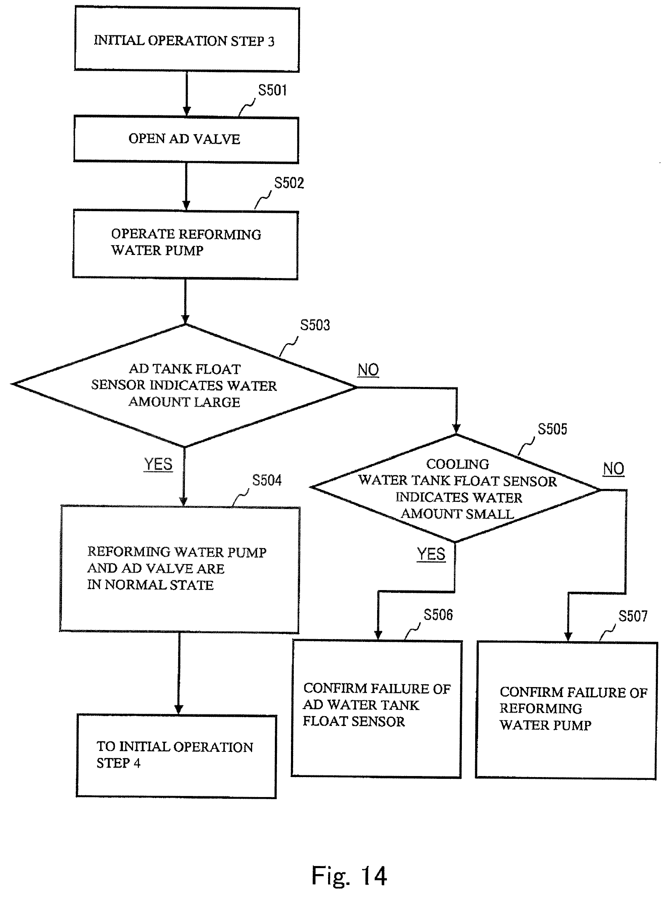

Next, the initial operation step 3 is described based on Fig. 14. Fig. 14 is a flowchart showing an example of a method of operating in the initial operation step 3 according to Embodiment 2. Here, water is fed into the AD tank 6 by opening the AD valve 34 (step S501) and operating the reforming water pump 32 (step S502). In a case where the design water amount of the AD tank 6, at or above which amount an AD tank float sensor 7 provided at the AD tank 6 indicates the water amount being large, is AD2 liters, if the design flow rate of water supplied from the reforming water pump 32 is KPV liters/min, then the AD tank float sensor 7 should indicate the water amount being large in (AD2/KPV) minutes. If the AD tank float sensor 7 indicates the water amount being large in (AD2/KPV) minutes (YES in step S503), it can be determined that the AD tank float sensor 7 and the reforming water pump 32 are both in a normal state (step S504). Accordingly, the operation proceeds to an initial operation step 4. In a case where the AD tank float sensor 7 does not indicate the water amount being large even if a period longer than (AD2/KPV) minutes has elapsed (NO in step S503), it is determined that either the AD tank float sensor 7 or the reforming water pump 32 is failed. Here, such determination can be made for the following reason: the AD valve 34 is configured in such a manner that the spring pressure and direction of the valve are adjusted such that the valve opens when the discharge pressure of the reforming water pump 32 is applied to the valve, and therefore, the valve allows water to flow even if the valve is failed so long as the reforming water pump 32 is in a normal state. In this case, if the cooling water tank float sensor 29 indicates the water amount being small (YES in step S505), it means that water has been taken out of the cooling water tank 28. Therefore, it can be determined that the reforming water pump 32 is in a normal state. Accordingly, it is confirmed that the AD tank float sensor 7 is failed (step S506). On the other hand, if the cooling water tank float sensor 29 does not indicate the water amount being small, it means that water has not been taken out of the cooling water tank 28. Therefore, it is confirmed that the reforming water pump 32 is failed (step S507). Accordingly, such an operation as electric power generation may be stopped or a failure notification may be given so that no other components will be damaged and prompt addressing of the failure can be facilitated. Thus, a highly reliable fuel cell power generator can be realized.

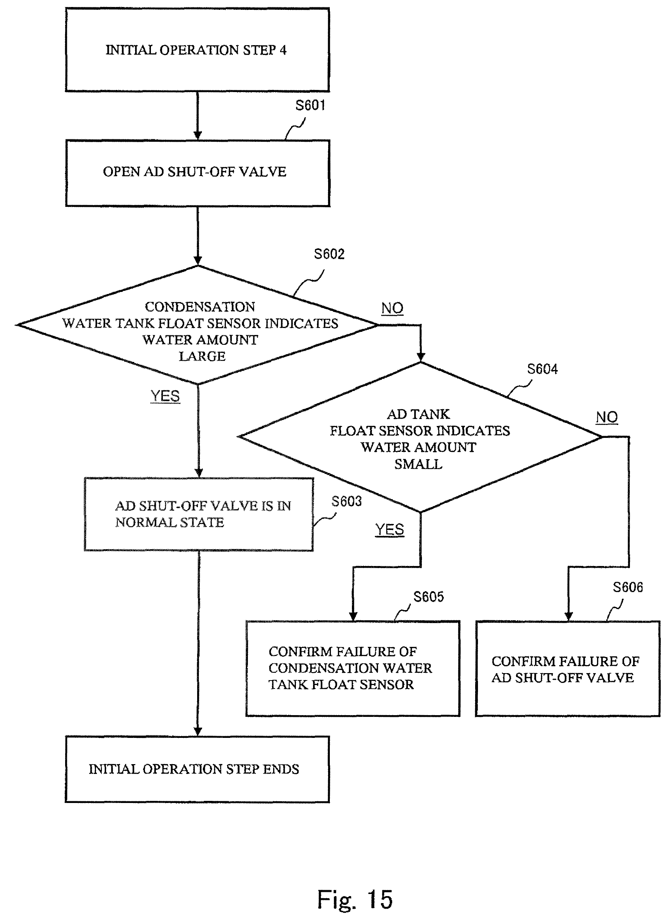

Next, the initial operation step 4 is described based on Fig. 15. Fig. 15 is a flowchart showing an example of a method of operating in the initial operation step 4 according to Embodiment 2. Here, water is fed into the condensation water tank 4 through the AD pipe 9 by opening the AD shut-off valve 8 (step S601). If the design flow rate of water supplied from the AD pipe 9 until the condensation water tank float sensor 5 indicates the water amount being large is AHV liters/min, then the condensation water tank float sensor 5 should indicate the water amount being large within (AD2/AHV) minutes. If the condensation water tank float sensor 5 indicates the water amount being large in (AD2/AHV) minutes (YES in step S602), it can be determined that the AD shut-off valve is in a normal state (step S603). Accordingly, the initial operation step is ended. In a case where the condensation water tank float sensor 5 does not indicate the water amount being large even if a period longer than (AD2/AHV) minutes has elapsed (NO in step S602), it is determined that either the condensation water tank float sensor 5 or the AD shut-off valve 8 is failed. In this case, if the AD tank float sensor 7 indicates the water amount being small (YES in step S604), it means that water has been taken out of the AD tank 6. Therefore, it can be determined that the AD shut-off valve 8 is in a normal state. Accordingly, it is confirmed that the condensation water tank float sensor 5 is failed (step S605). On the other hand, if the AD tank float sensor 7 does not indicate the water amount being small (NO in step S604), it means that water has not been taken out of the AD tank 6. Therefore, it is confirmed that the AD shut-off valve 8 is failed (step S606). It should be noted that it has been confirmed in the initial operation step 1 that the condensation water tank float sensor 5 is not failed. Therefore, in a case where the condensation water tank float sensor 5 does not indicate the water amount being large even if a period longer than (AD2/AHV) minutes has elapsed, it may be immediately confirmed that the AD shut-off valve 8 is failed. Accordingly, such an operation as electric power generation may be stopped or a failure notification may be given so that no other components will be damaged and prompt addressing of the failure can be facilitated. Thus, a highly reliable fuel cell power generator can be realized.

Described next are not cases where the fuel cell power generator 1 is operated for the first time, but cases where failure detection is performed regularly after a certain operation of the fuel cell power generator 1 has been performed. It should be noted that the term "regularly" means that the failure detection may be performed, for example, each time before start-up is performed or each time after the fuel cell power generator 1 has ended operating, or may be performed every predetermined period.

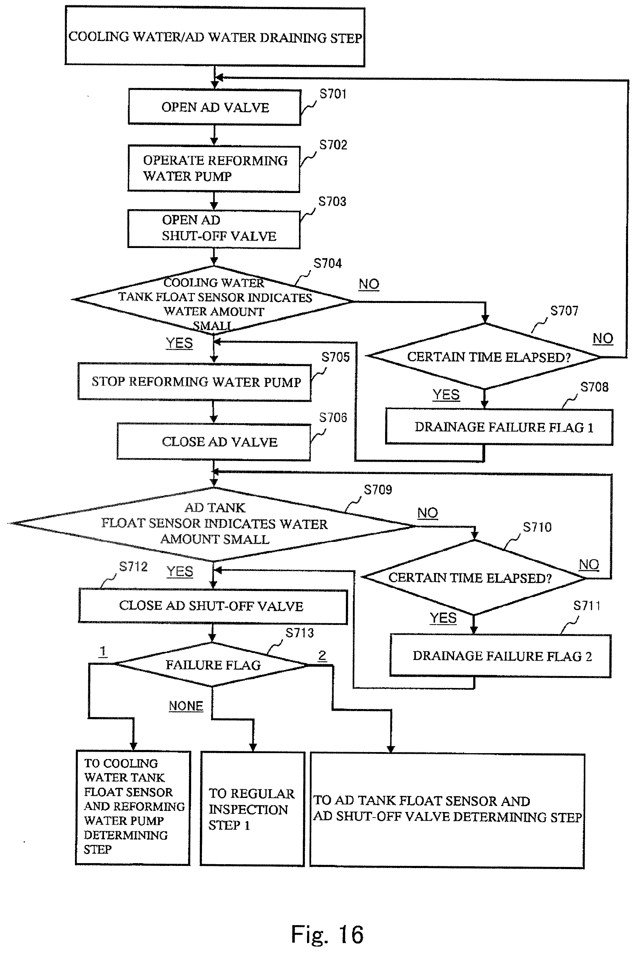

First, a cooling water/AD water draining step is described based on Fig. 16. Fig. 16 is a flowchart showing an example of a method of operating in the cooling water/AD water draining step according to Embodiment 2. Here, the AD valve 34 is opened (step S701); the reforming water pump 32 is operated (step S702); and the AD shut-off valve 8 is opened (step S703). Accordingly, water in the cooling water tank 28 flows into the AD tank 6, and water in the AD tank flows into the condensation water tank 4. As a result, the cooling water tank float sensor 29 should indicate the water amount being small. If the cooling water tank float sensor 29 indicates the water amount being small within a certain period of time (YES in step S704), the reforming water pump 32 is stopped (step S705) and the AD valve 34 is closed (step S706). If the cooling water tank float sensor 29 does not indicate the water amount being small within the certain period of time (NO in step S704 and YES in step S707), the controller 36 sets a drainage failure flag 1 (step S708), stops the reforming water pump 32 (step S705), and closes the AD valve 34 (step S706). If the AD tank float sensor 7 indicates the water amount being small within the certain period of time (step S705), the controller 36 closes the AD shut-off valve 8. If the AD tank float sensor 7 does not indicate the water amount being small within the certain period of time (NO in step S709 and YES in step S710), the controller 36 sets a drainage failure flag 2 (step S711) and closes the AD shut-off valve 8 (step S712). If there is no failure flag being set (NONE in step S713), it is determined that the cooling water/AD water draining step has normally ended, and the operation proceeds to a regular inspection step 1. If the drainage failure flag 1 is set ("1" in step S713), the operation proceeds to a cooling water tank float sensor and reforming water pump determining step. If the drainage failure flag 2 is set ("2" in step S713), the operation proceeds to an AD tank float sensor and AD shut-off valve determining step.

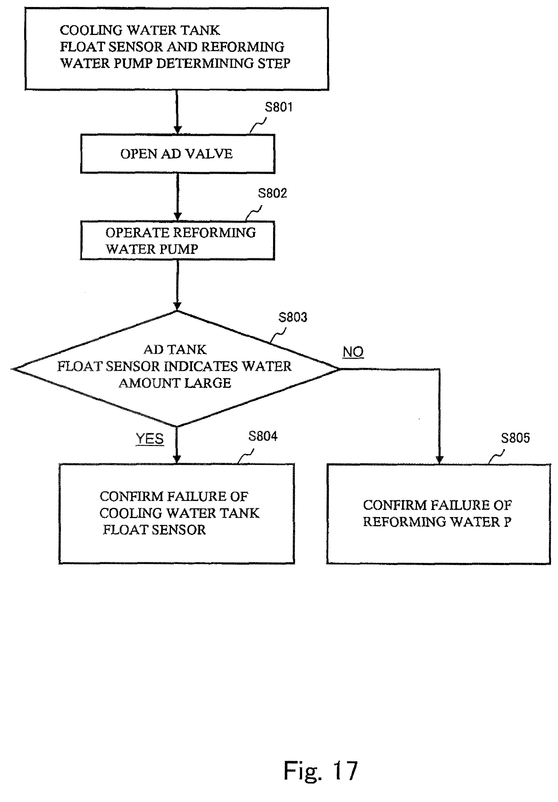

Next, the cooling water tank float sensor and reforming water pump determining step is described based on Fig. 17. Fig. 17 is a flowchart showing an example of a method of operating in the cooling water tank float sensor and reforming water pump determining step according to Embodiment 2. Here, the AD valve 34 is opened (step S801) and the reforming water pump 32 is operated (step S802). As a result, if the AD tank float sensor 7 indicates the water amount being large within a certain period of time (YES in step S803), it means that water has been sent out of the cooling water tank 28. Therefore, it is determined that the cooling water tank float sensor 29 is failed (step S804). If the AD tank float sensor 7 does not indicate the water amount being large within the certain period of time (NO in step S803), it means that water has not been sent out of the cooling water tank 28. Therefore, it is determined that the reforming water pump 32 is failed (step S805). Accordingly, such an operation as electric power generation may be stopped or a failure notification may be given so that no other components will be damaged and prompt addressing of the failure can be facilitated. Thus, a highly reliable fuel cell power generator can be realized.

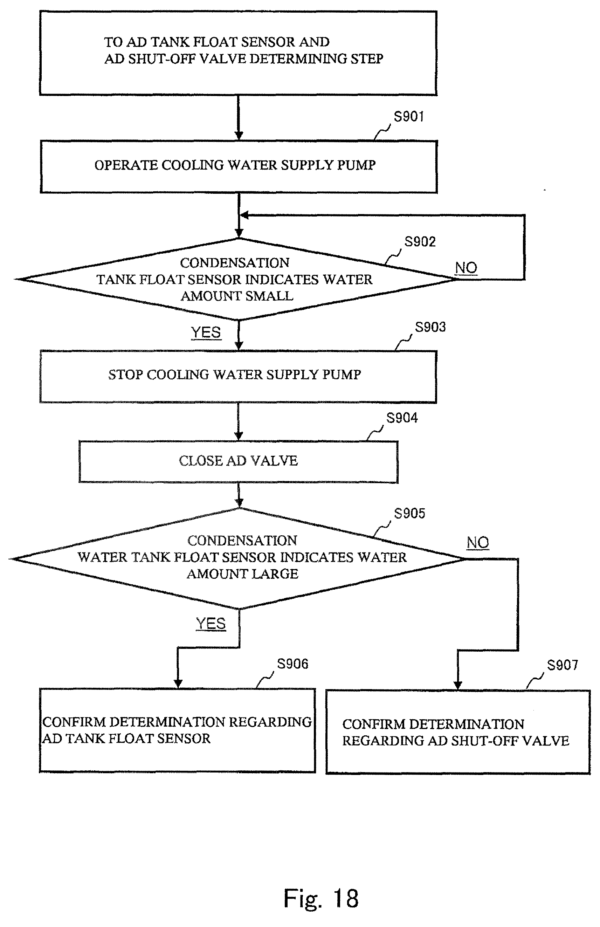

Next, the AD tank float sensor and AD shut-off valve determining step is described based on Fig. 18. Fig. 18 is a flowchart showing an example of a method of operating in the AD tank float sensor and AD shut-off valve determining step according to Embodiment 2. Here, the cooling water supply pump 10 is operated until the condensation water tank float sensor 5 indicates the water amount being small (steps S901 and S902). When the condensation water tank float sensor 5 indicates the water amount being small (YES in step S902), the cooling water supply pump 10 is stopped (step S903). Next, the AD valve 34 is opened (step S904). Then, if the condensation water tank float sensor 5 indicates the water amount being large within a certain period of time (YES in step S905), it means that water has been sent out of the AD tank 6. Therefore, it is determined that the AD tank float sensor 7 is failed (step S906). If the condensation water tank float sensor 5 does not indicate the water amount being large within the certain period of time (NO in step S905), it means that water has not been sent out of the AD tank 6. Therefore, it is determined that the AD shut-off valve 8 is failed (step S907). Accordingly, such an operation as electric power generation may be stopped or a failure notification may be given so that no other components will be damaged and prompt addressing of the failure can be facilitated. Thus, a highly reliable fuel cell power generator can be realized.

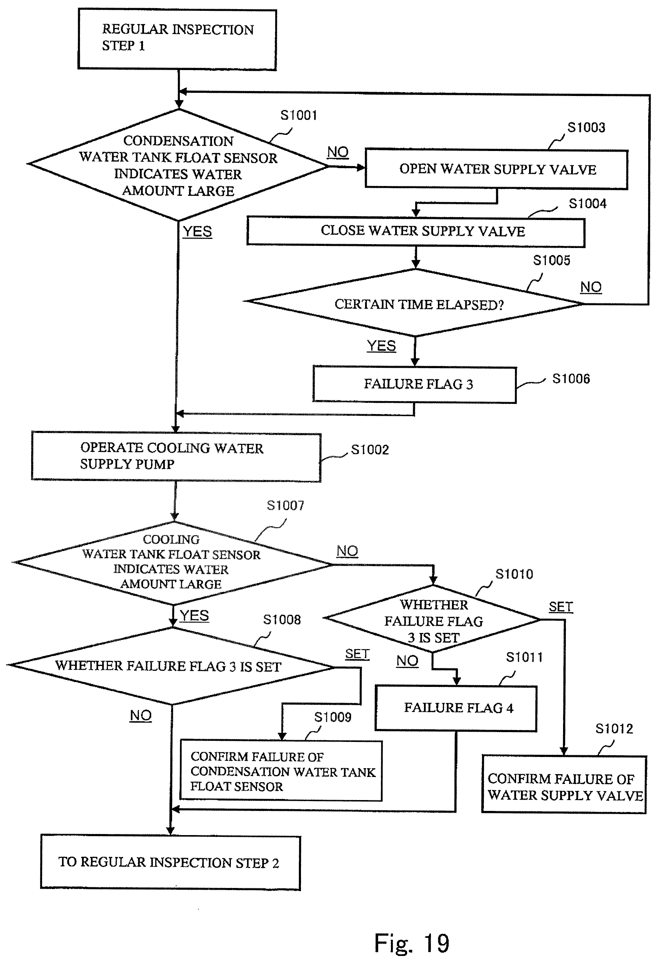

Next, the regular inspection step 1 is described based on Fig. 19. Fig. 19 is a flowchart showing an example of a method of operating in the regular inspection step 1 according to Embodiment 2. If the condensation water tank float sensor 5 is indicating the water amount being large (YES in step S1001), the cooling water supply pump 10 is operated (step S1002). If the condensation water tank float sensor 5 is not indicating the water amount being large (NO in step S1001), the water supply valve 20 is opened and closed (steps S1003 and S1004), so that water is supplied to the condensation water tank 4. Then, if the condensation water tank float sensor 5 indicates the water amount being large within a certain period of time, the operation proceeds to a step in which the cooling water supply pump 10 is operated (step S1002). If the condensation water tank float sensor 5 does not indicate the water amount being large within the certain period of time (YES in step S1005), the controller 36 sets a failure flag 3 (step S1006) and the operation proceeds to the step in which the cooling water supply pump 10 is operated (step S1002). Then, if the cooling water tank float sensor 29 indicates the water amount being large within a certain period of time (YES in step S1007) and the failure flag 3 is not set ("NO" in step S1008), it is determined in the regular inspection step 1 that there is no problem, and the operation proceeds to a regular inspection step 2. If the failure flag 3 is set ("SET" in step S1008), it means that the condensation water tank float sensor 5 is failed. Therefore, it is determined that the condensation water tank float sensor 5 is failed (step S1009). If the cooling water tank float sensor 29 does not indicate the water amount being large within the certain period of time (NO in step S1007) and the failure flag 3 is not set ("NO," in step S1010), the controller 36 sets a failure flag 4 (step S1011) and the operation proceeds to the regular inspection step 2. If the failure flag 3 is set ("SET" in step S1010), it is determined that the water supply valve 20 is failed (step S1012). Accordingly, such an operation as electric power generation may be stopped or a failure notification may be given so that no other components will be damaged and prompt addressing of the failure can be facilitated. Thus, a highly reliable fuel cell power generator can be realized.

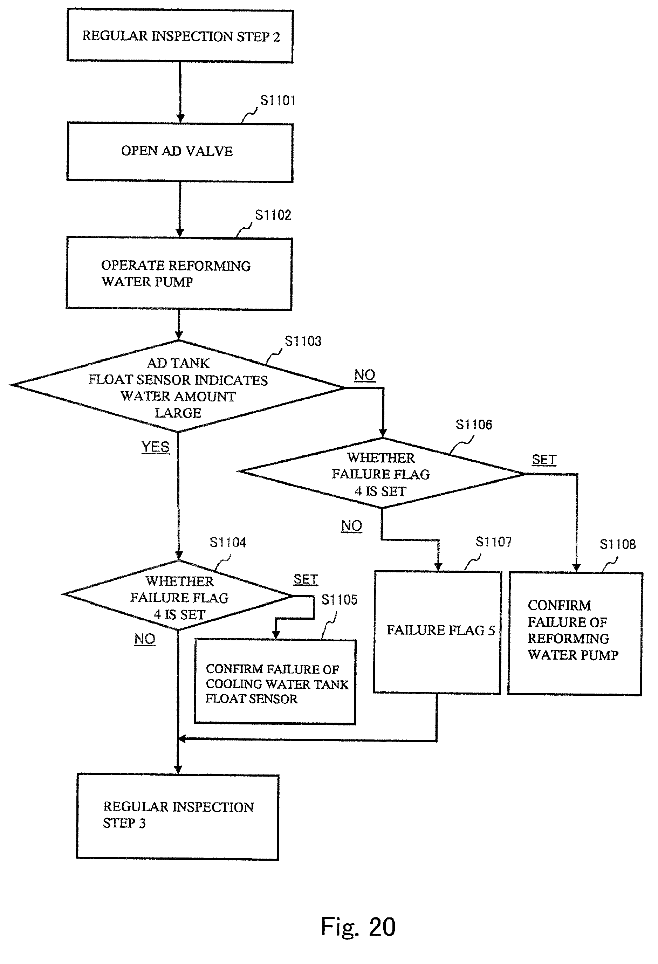

Next, the regular inspection step 2 is described based on Fig. 20. Fig. 20 is a flowchart showing an example of a method of operating in the regular inspection step 2 according to Embodiment 2. Here, the AD valve 34 is opened (step S1101) and the reforming water pump 32 is operated (step S1102). As a result, if the AD tank float sensor 7 indicates the water amount being large (YES in step S1103) and the failure flag 4 is not set ("NO" in step S1104), it is determined in the regular inspection step 2 that there is no problem, and the operation proceeds to a regular inspection step 3. If the failure flag 4 is set ("SET" in step S1104), it means that the cooling water tank float sensor 29 is failed. Therefore, it is determined that the cooling water tank float sensor 29 is failed (step S1105). If the AD tank float sensor 7 does not indicate the water amount being large within a certain period of time (NO in step S1103) and the failure flag 4 is not set ("NO" in step S1106), the controller 36 sets a failure flag 5 (step S1107) and the operation proceeds to the regular inspection step 3. If the failure flag 4 is set ("SET" in step S1106), it is determined that the reforming water pump 32 is failed (step S1108). Accordingly, such an operation as electric power generation may be stopped or a failure notification may be given so that no other components will be damaged and prompt addressing of the failure can be facilitated. Thus, a highly reliable fuel cell power generator can be realized.

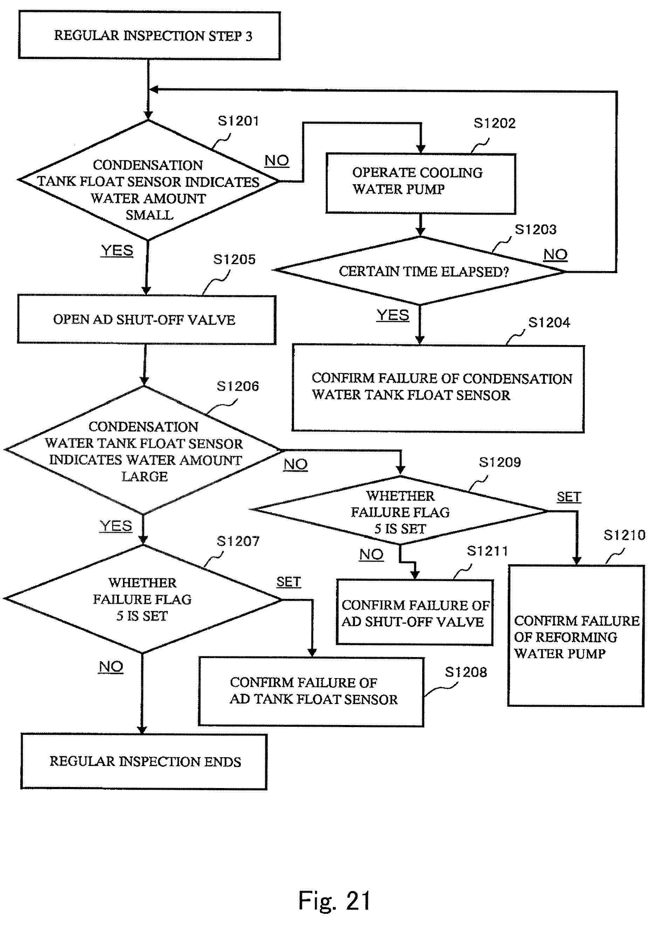

Next, the regular inspection step 3 is described based on Fig. 21. Fig. 21 is a flowchart showing an example of a method of operating in the regular inspection step 3 according to Embodiment 2. If the condensation water tank float sensor 5 is not indicating the water amount being small (NO in step S1201), the cooling water supply pump 10 is operated (step S1202) so that the condensation water tank float sensor 5 will indicate the water amount being small. Then, if the condensation water tank float sensor 5 does not indicate the water amount being large even after elapse of a certain period of time ("YES" in step S1203), it is determined that the condensation water tank float sensor 5 is failed (step S1204). If the condensation water tank float sensor 5 indicates the water amount being small, then the AD shut-off valve 8 is opened (step S1205). Thereafter, if the condensation water tank float sensor 5 indicates the water amount being large (YES in step S1206) and the failure flag 5 is not set ("NO" in step S1207), it is determined that everything is in a normal state and the regular inspection is ended. If the failure flag 5 is set ("SET" in step S1207), it means that the AD tank float sensor 7 is failed. Therefore, it is determined that the AD tank float sensor 7 is failed (step S1208). If the condensation water tank float sensor 5 does not indicate the water amount being large (NO in step S1206) and the failure flag 5 is set ("SET" in step S1209), it is determined that the reforming water pump is failed (step S1210). If the condensation water tank float sensor 5 does not indicate the water amount being large (NO in step S1206) and the failure flag 5 is not set, it is determined that the AD shut-off valve is failed (step S1211).

In the above manner, failure of components involved in fundamental operations can be checked, which makes it possible to realize a highly reliable fuel cell power generator capable of effectively utilizing water that is produced at the time of electric power generation.

### Industrial Applicability

As described above, the fuel cell system according to the present invention is useful since it is capable of detecting abnormalities with a simplified configuration and improved reliability.

### Reference Signs List

- 1: fuel cell power generator
- 2: cell stack
- 3: hydrogen generator
- 3a: reformer
- 3b: burner
- 4: condensation water tank
- 5: condensation water tank float sensor
- 6: AD tank
- 7: AD tank float sensor
- 8: AD shut-off valve
- 9: AD pipe
- 10: cooling water supply pump
- 11: water purifier
- 12: raw material pipe
- 13: combustion air pipe
- 14: cathode air pipe
- 15: fuel gas pipe
- 16: exhaust cathode air pipe
- 17: exhaust cathode air heat exchanger
- 18: stored hot water inlet pipe
- 19: stored hot water outlet pipe
- 20: water supply valve
- 21: gas-liquid contact part
- 22: cathode exhaust gas pipe
- 23: off gas pipe
- 24: AD pipe
- 25: AD heat exchanger
- 26: flue gas pipe
- 27: flue gas heat exchanger
- 28: cooling water tank
- 29: cooling water tank float sensor
- 30: cooling water circulation pump
- 31: cooling water heat exchanger
- 32: reforming water pump
- 33: reforming water valve
- 34: AD valve
- 35: power circuit
- 36: controller
- 37: flue gas exhaust pipe
- 38: cooling water supply pipe
- 39: condensation water drain pipe
- 40: controller
- 41: first water tank
- 42: first water amount sensor
- 43: second water tank
- 44: second water amount sensor
- 50: fuel cell unit
- 60: first water moving mechanism
- 61: first connection passage
- 62: first valve
- 63: second connection passage
- 64: first pump
- 65: third connection passage
- 66: second pump
- 67: fourth connection passage
- 68: second valve
- 69: water discharge mechanism
- 100: fuel cell system

## Claims

1. A fuel cell system comprising:
a fuel cell unit configured to generate electric power by using a fuel gas and an oxidizing gas;
a first water tank configured to store at least one of condensation water, cooling water, and stored hot water, the condensation water being produced when moisture in a gas discharged from the fuel cell unit is condensed, the cooling water being used in cooling the fuel cell unit, the stored hot water being used in recovering heat from the fuel cell unit;
a second water tank configured to store at least one of the condensation water, the cooling water, and the stored hot water;
a first water amount sensor configured to detect an amount of water in the first water tank;
a second water amount sensor configured to detect an amount of water in the second water tank;
a first water moving mechanism configured to move water in the first water tank to the second water tank; and
a controller configured to perform control of the first water moving mechanism, wherein
the controller is configured to
perform control of the first water moving mechanism to move water from the first water tank to the second water tank,
thereafter perform a determination operation to determine that there is an abnormality in at least one of the following cases: a case where the amount of water detected by the first water amount sensor has not decreased as compared to before starting to perform the control of the first water control mechanism; and a case where the amount of water detected by the second water amount sensor has not increased as compared to before starting to perform the control of the first water control mechanism, and
in the determination operation,
determine that there is an abnormality in the first water amount sensor in a case where the amount of water detected by the first water amount sensor has not decreased and the amount of water detected by the second water amount sensor has increased,
determine that there is an abnormality in the second water amount sensor in a case where the amount of water detected by the first water amount sensor has decreased and the amount of water detected by the second water amount sensor has not increased, and
determine that there is an abnormality in the first water moving mechanism in a case where the amount of water detected by the first water amount sensor has not decreased and the amount of water detected by the second water amount sensor has not increased.

2. The fuel cell system according to claim 1, wherein
the controller is configured to cause the system's operation to continue in a case where the amount of water detected by the first water amount sensor has decreased and the amount of water detected by the second water amount sensor has increased.

3. The fuel cell system according to claim 1 or claim 2, wherein
the controller is configured such that, when having determined in the determination operation that there is an abnormality, the controller performs stopping of the system's operation and thereafter prohibits start-up or performs restart-up.

4. The fuel cell system according to any one of claims 1 to 3, wherein
the first water tank is disposed above the second water tank with respect to a direction of gravity, and
the first water moving mechanism includes: a first connection passage connecting the first water tank and the second water tank; and a first valve provided on the first connection passage.

5. The fuel cell system according to any one of claims 1 to 3, wherein
the first water moving mechanism includes: a second connection passage connecting the first water tank and the second water tank; and a first pump provided on the second connection passage and configured to move water from the first water tank to the second water tank.

6. The fuel cell system according to claim 4, comprising a second water moving mechanism configured to move water in the second water tank to the first water tank, wherein
the second water moving mechanism includes: a third connection passage connecting the first water tank and the second water tank; and a second pump provided on the third connection passage and configured to move water from the second water tank to the first water tank, and
the controller is configured to perform control of using the second water moving mechanism to move water from the second water tank to the first water tank before using the first water moving mechanism to move water from the first water tank to the second water tank.

7. The fuel cell system according to claim 5, comprising a second water moving mechanism configured to move water in the second water tank to the first water tank, wherein
the second water tank is disposed above the first water tank with respect to a direction of gravity,
the second water moving mechanism includes: a fourth connection passage connecting the first water tank and the second water tank; and a second valve provided on the fourth connection passage, and
the controller is configured to perform control of using the second water moving mechanism to move water from the second water tank to the first water tank before using the first water moving mechanism to move water from the first water tank to the second water tank.

8. The fuel cell system according to any one of claims 1 to 7, comprising a water discharge mechanism configured to discharge water from the second water tank, wherein
the controller is configured to perform control of using the water discharge mechanism to discharge water from the second water tank before using the first water moving mechanism to move water from the first water tank to the second water tank.

9. The fuel cell system according to any one of claims 1 to 8, wherein
the fuel cell unit includes: a hydrogen generator configured to generate a hydrogencontaining fuel gas by using a raw material and water; a fuel cell configured to generate electric power by using the fuel gas and an oxidizing gas; and a combustor configured to heat the hydrogen generator by combusting at least one of the raw material, the fuel gas, and an anode exhaust gas discharged from the fuel cell, and
the condensation water is water produced when moisture in at least one of the following gases is condensed: the anode exhaust gas; a cathode exhaust gas discharged from the fuel cell; and a flue gas discharged from the combustor.

10. The fuel cell system according to claim 1, wherein the controller is configured to perform outputting of an abnormality signal when having determined in the determination operation that there is an abnormality,
the fuel cell system further comprising an abnormality notification device configured to give a notification of an abnormality in a case where the abnormality signal is outputted.

11. A method of operating a fuel cell system, comprising:
detecting, by a first water amount sensor, an amount of water in a first water tank configured to store at least one of condensation water, cooling water, and stored hot water, the condensation water being produced when moisture in a gas discharged from a fuel cell unit is condensed, the cooling water being used in cooling a fuel cell, the stored hot water being used in recovering heat from the fuel cell;
detecting, by a second water amount sensor, an amount of water in a second water tank configured to store at least one of the condensation water, the cooling water, and the stored hot water;
controlling a first water moving mechanism to move water from the first water tank to the second water tank; and
thereafter performing a determination operation to determine that there is an abnormality in at least one of the following cases: a case where the amount of water detected by the first water amount sensor has not decreased as compared to before controlling the first water moving mechanism; and a case where the amount of water detected by the second water amount sensor has not increased as compared to before controlling the first water moving mechanism, wherein
performing the determination operation includes:
determining that there is an abnormality in the first water amount sensor in a case where the amount of water detected by the first water amount sensor has not decreased and the amount of water detected by the second water amount sensor has increased;
determining that there is an abnormality in the second water amount sensor in a case where the amount of water detected by the first water amount sensor has decreased and the amount of water detected by the second water amount sensor has not increased; and
determining that there is an abnormality in the first water moving mechanism in a case where the amount of water detected by the first water amount sensor has not decreased and the amount of water detected by the second water amount sensor has not increased.

12. The method of operating the fuel cell system according to claim 11, comprising causing the system's operation to continue in a case where the amount of water detected by the first water amount sensor has decreased and the amount of water detected by the second water amount sensor has increased.

13. The method of operating the fuel cell system according to claim 11 or 12, comprising
when having determined in performing the determination operation that there is an abnormality, performing stopping of the system's operation and thereafter prohibiting start-up or performing restart-up.

14. The method of operating the fuel cell system according to any one of claims 11 to 13, comprising
using a second water moving mechanism, which is configured to move water in the second water tank to the first water tank, to move water from the second water tank to the first water tank before using the first water moving mechanism to move water from the first water tank to the second water tank.

15. The method of operating the fuel cell system according to any one of claims 11, 13, and 14, comprising
using a water discharge mechanism, which is configured to discharge water from the second water tank, to discharge water from the second water tank before using the first water moving mechanism to move water from the first water tank to the second water tank.

16. The method of operating the fuel cell system according to claim 11, comprising:
outputting of an abnormality signal when having determined in the determination operation that there is an abnormality; and
giving a notification of an abnormality in a case where the abnormality signal is outputted.

## Patentansprüche

1. Brennstoffzellen-System, das umfasst:
eine Brennstoffzellen-Einheit, die so eingerichtet ist, dass sie unter Verwendung eines Brenngases und eines oxidierenden Gases elektrische Energie erzeugt;
einen ersten Wasserbehälter, der so eingerichtet ist, dass er Kondenswasser, Kühlwasser oder/und gespeichertes Heißwasser speichert, wobei das Kondenswasser erzeugt wird, wenn Feuchtigkeit in einem aus der Brennstoffzellen-Einheit ausgestoßenen Gas kondensiert, das Kühlwasser beim Kühlen der Brennstoffzellen-Einheit eingesetzt wird und das gespeicherte Heißwasser beim Zurückgewinnen von Wärme von der Brennstoffzellen-Einheit eingesetzt wird;
einen zweiten Wasserbehälter, der so eingerichtet ist, dass er das Kondenswasser, das Kühlwasser oder/und das gespeicherte Heißwasser speichert;
einen ersten Wassermengen-Sensor, der so eingerichtet ist, dass er eine Wassermenge in dem ersten Wasserbehälter erfasst;
einen zweiten Wassermengen-Sensor, der so eingerichtet ist, dass er eine Wassermenge in dem zweiten Wasserbehälter erfasst;
einen ersten Wasser-Transportmechanismus, der so eingerichtet ist, dass er Wasser in dem ersten Wasserbehälter zu dem zweiten Wasserbehälter transportiert; und
eine Steuereinrichtung, die so eingerichtet ist, dass sie Steuerung des ersten Wasser-Transportmechanismus durchführt, wobei
die Steuereinrichtung so eingerichtet ist, dass sie:
Steuerung des ersten Wasser-Transportmechanismus zum Transportieren von Wasser von dem ersten Wasserbehälter zu dem zweiten Wasserbehälter durchführt,
anschließend einen Feststellungsvorgang durchführt, um in wenigstens einem der folgenden Fälle festzustellen, dass eine Abnormalität vorliegt:
einem Fall, in dem die durch den ersten Wassermengen-Sensor erfasste Wassermenge im Vergleich zu derjenigen vor Beginn des Durchführens der Steuerung des ersten Wasser-Transportmechanismus nicht abgenommen hat; und
einem Fall, in dem die durch den zweiten Wassermengen-Sensor erfasste Wassermenge im Vergleich zu derjenigen vor Beginn des Durchführens der Steuerung des ersten, Wasser-Transportmechanismus zugenommen hat, und
bei dem Feststellungsvorgang
feststellt, dass eine Abnormalität in dem ersten Wassermengen-Sensor vorliegt, wenn die durch den ersten Wassermengen-Sensor erfasste Wassermenge nicht abgenommen hat und die durch den zweiten Wassermengen-Sensor erfasste Wassermenge zugenommen hat,
feststellt, dass eine Abnormalität in dem zweiten Wassermengen-Sensor vorliegt, wenn die durch den ersten Wassermengen-Sensor erfasste Wassermenge abgenommen hat und die durch den zweiten Wassermengen-Sensor erfasste Wasser-menge nicht zugenommen hat, und
feststellt, dass eine Abnormalität in dem ersten Wasser-Transportmechanismus vorliegt, wenn die durch den ersten Wassermengen-Sensor erfasste Wassermenge nicht abgenommen hat und die durch den zweiten Wassermengen-Sensor erfasste Wassermenge nicht zugenommen hat.

2. Brennstoffzellen-System nach Anspruch 1, wobei
die Steuereinrichtung so eingerichtet ist, dass sie veranlasst, dass die Funktion des Systems fortgesetzt wird, wenn die durch den ersten Wassermengen-Sensor erfasste Wassermenge abgenommen hat und die durch den zweiten Wassermengen-Sensor erfasste Wassermenge zugenommen hat.

3. Brennstoffzellen-System nach Anspruch 1 oder Anspruch 2, wobei
die Steuereinrichtung so eingerichtet ist, dass sie, wenn sie in dem Feststellvorgang festgestellt hat, dass eine Abnormalität vorliegt, die Steuereinrichtung Unterbrechung der Funktion des Systems durchführt und anschließend Starten unterbindet oder erneutes Starten durchführt.

4. Brennstoffzellen-System nach einem der Ansprüche 1 bis 3, wobei
der erste Wasserbehälter in Bezug auf eine Richtung der Schwerkraft über dem zweiten Wasserbehälter angeordnet ist, und
der erste Wasser-Transportmechanismus einen ersten Verbindungskanal, der den ersten Wasserbehälter und den zweiten Wasserbehälter verbindet, sowie ein erstes Ventil enthält, das an dem ersten Verbindungskanal vorhanden ist.

5. Brennstoffzellen-System nach einem der Ansprüche 1 bis 3, wobei
der erste Wasser-Transportmechanismus einen zweiten Verbindungskanal, der den ersten Wasserbehälter und den zweiten Wasserbehälter verbindet, sowie eine erste Pumpe enthält, die an dem zweiten Verbindungskanal vorhanden und so eingerichtet ist, dass sie Wasser von dem ersten Wasserbehälter zu dem zweiten Wasserbehälter transportiert.

6. Brennstoffzellen-System nach Anspruch 4, das einen zweiten Wasser-Transportmechanismus umfasst, der so eingerichtet ist, dass er Wasser in dem zweiten Wasserbehälter zu dem ersten Wasserbehälter transportiert, wobei
der zweite Wasser-Transportmechanismus einen dritten Verbindungskanal, der den ersten Wasserbehälter und den zweiten Wasserbehälter verbindet, sowie eine zweite Pumpe enthält, die an dem dritten Verbindungskanal vorhanden und so eingerichtet ist, dass sie Wasser von dem zweiten Wasserbehälter zu dem ersten Wasserbehälter transportiert, und die Steuereinrichtung so eingerichtet ist, dass sie Steuerung zum Einsatz des zweiten Wasser-Transportmechanismus zum Transportieren von Wasser von dem zweiten Wasserbehälter zu dem ersten Wasserbehälter vor Einsatz des ersten Wasser-Transportmechanismus zum Transportieren von Wasser von dem ersten Wasserbehälter zu dem zweiten Wasserbehälter durchführt.

7. Brennstoffzellen-System nach Anspruch 5, das einen zweiten Wasser-Transportmechanismus umfasst, der so eingerichtet ist, dass er Wasser in dem zweiten Wasserbehälter zu dem ersten Wasserbehälter transportiert, wobei
der zweite Wasserbehälter in Bezug auf eine Richtung der Schwerkraft über dem ersten Wasserbehälter angeordnet ist,
der zweite Wasser-Transportmechanismus einen vierten Verbindungskanal, der den ersten Wasserbehälter und den zweiten Wasserbehälter verbindet, sowie ein zweites Ventil enthält, das an dem vierten Verbindungskanal vorhanden ist, und
die Steuereinrichtung so eingerichtet ist, dass sie Steuerung zum Einsatz des zweiten Wasser-Transportmechanismus zum Transportieren von Wasser von dem zweiten Wasserbehälter zu dem ersten Wasserbehälter vor Einsatz des ersten Wasser-Transportmechanismus zum Transportieren von Wasser von dem ersten Wasserbehälter zu dem zweiten Wasserbehälter durchführt.

8. Brennstoffzellen-System nach einem der Ansprüche 1 bis 7, das einen Wasser-Ableitmechanismus umfasst, der so eingerichtet ist, dass er Wasser aus dem zweiten Wasserbehälter ableitet, wobei
die Steuereinrichtung so eingerichtet ist, dass sie Steuerung zum Einsatz des Wasser-Ableitmechanismus zum Ableiten von Wasser aus dem zweiten Wasserbehälter vor Einsatz des ersten Wasser-Transportmechanismus zum Transportieren von Wasser von dem ersten Wasserbehälter zu dem zweiten Wasserbehälter durchführt.

9. Brennstoffzellen-System nach einem der Ansprüche 1 bis 8, wobei
die Brennstoffzellen-Einheit einen Wasserstofferzeuger, der so eingerichtet ist, dass er ein Wasserstoff enthaltendes Gas unter Verwendung eines Ausgangsmaterials und von Wasser erzeugt, eine Brennstoffzelle, die so eingerichtet ist, dass sie elektrische Energie unter Verwendung des Brenngases und eines oxidierenden Gases erzeugt, sowie einen Brenner enthält, der so eingerichtet ist, dass er den Wasserstofferzeuger durch Verbrennen des Ausgangsmaterials, des Brenngases oder/und eines Anoden-Abgases erhitzt, das aus der Brennstoffzelle abgeleitet wird, und
das Kondenswasser Wasser ist, das erzeugt wird, wenn Feuchtigkeit in wenigstens einem der folgenden Gase kondensiert:
dem Anoden-Abgas;
einem Kathoden-Abgas, das aus der Brennstoffzelle abgeleitet wird, und einem Abgas, das aus dem Brenner abgeleitet wird.

10. Brennstoffzellen-System nach Anspruch 1, wobei die Steuereinrichtung so eingerichtet ist, dass sie Ausgang eines Abnormalitäts-Signals durchführt, wenn sie in dem Feststellungsvorgang festgestellt hat, dass eine Abnormalität vorliegt,
das Brennstoffzellen-System des Weiteren eine Vorrichtung zum Benachrichtigen über eine Abnormalität umfasst, die so eingerichtet ist, dass sie über eine Abnormalität benachrichtigt, wenn das Abnormalitäts-Signal ausgegeben wird.

11. Verfahren zum Betreiben eines Brennstoffzellen-Systems, das umfasst:
Erfassen einer Wassermenge in einem ersten Wasserbehälter, der so eingerichtet ist, dass er Kondenswasser, Kühlwasser oder/und gespeichertes Heißwasser speichert, mit einem ersten Wassermengen-Sensor, wobei das Kondenswasser erzeugt wird, wenn Feuchtigkeit in einem Gas kondensiert, das aus einer Brennstoffzellen-Einheit abgeleitet wird, das Kühlwasser beim Kühlen einer Brennstoffzelle eingesetzt wird und das gespeicherte Heißwasser beim Zurückgewinnen von Wärme von der Brennstoffzelle eingesetzt wird;
Erfassen einer Wassermenge in einem zweiten Wasserbehälter, der so eingerichtet ist, dass er das Kondenswasser, das Kühlwasser oder/und das gespeicherte Heißwasser speichert, mit einem zweiten Wassermengen-Sensor,
Steuern eines ersten Wasser-Transportmechanismus zum Transportieren von Wasser von dem ersten Wasserbehälter zu dem zweiten Wasserbehälter; und
anschließend Durchführen eines Feststellungsvorgangs, in dem in wenigstens einem der folgenden Fälle festgestellt wird, dass eine Art Normalität vorliegt:
einem Fall, in dem die durch den ersten Wassermengen-Sensor erfasste Wassermenge nicht geringer ist als vor dem Steuern des ersten Wasser-Transportmechanismus; und
einem Fall, in dem die durch den zweiten Wassermengen-Sensor erfasste Wassermenge nicht größer ist als vor dem Steuern des ersten Wasser-Transportmechanismus, wobei Durchführen des Feststellungsvorgangs einschließt:
Feststellen, dass eine Abnormalität in dem ersten Wassermengen-Sensor vorliegt, wenn die durch den ersten Wassermengen-Sensor erfasste Wassermenge nicht abgenommen hat und die durch den zweiten Wassermengen-Sensor erfasste Wassermenge zugenommen hat;
Feststellen, dass eine Abnormalität in dem zweiten Wassermengen-Sensor vorliegt, wenn die durch den ersten Wassermengen-Sensor erfasste Wassermenge abgenommen hat und die durch den zweiten Wassermengen-Sensor erfasste Wassermenge nicht zugenommen hat; und
Feststellen, dass eine Abnormalität in dem ersten Wasser-Transportmechanismus vorliegt, wenn die durch den ersten Wassermengen-Sensor erfasste Wassermenge nicht abgenommen hat und die durch den zweiten Wassermengen-Sensor erfasste Wassermenge nicht zugenommen hat.

12. Verfahren zum Betreiben des Brennstoffzellen-Systems nach Anspruch 11, das umfasst, dass veranlasst wird, dass die Funktion des Systems fortgesetzt wird, wenn die durch den ersten Wassermengen-Sensor erfasste Wassermenge abgenommen hat und die durch den zweiten Wassermengen-Sensor erfasste Wassermenge zugenommen hat.

13. Verfahren zum Betreiben des Brennstoffzellen-Systems nach Anspruch 11 oder 12, das umfasst, dass, wenn beim Durchführen des Feststellungsvorgangs festgestellt worden ist, dass eine Abnormalität vorliegt, Unterbrechung der Funktion des Systems durchgeführt wird und anschließend Starten unterbunden wird oder erneutes Starten durchgeführt wird.

14. Verfahren zum Betreiben des Brennstoffzellen-Systems nach einem der Ansprüche 11 bis 13, das umfasst:
Einsetzen eines zweiten Wasser-Transportmechanismus, der so eingerichtet ist, dass er Wasser in dem zweiten Wasserbehälter zu dem ersten Wasserbehälter transportiert, zum Transportieren von Wasser von dem zweiten Wasserbehälter zu dem ersten Wasserbehälter, bevor der erste Wasser-Transportmechanismus zum Transportieren von Wasser von dem ersten Wasserbehälter zu dem zweiten Wasserbehälter eingesetzt wird.

15. Verfahren zum Betreiben des Brennstoffzellen-Systems nach einem der Ansprüche 11, 13 und 14, das umfasst:
Einsetzen eines Wasser-Ableitmechanismus, der so eingerichtet ist, dass er Wasser aus dem zweiten Wasserbehälter ableitet, zum Ableiten von Wasser aus dem zweiten Wasserbehälter, bevor der erste Wasser-Transportmechanismus zum Transportieren von Wasser von dem ersten Wasserbehälter zu dem zweiten Wasserbehälter eingesetzt wird.

16. Verfahren zum Betreiben des Brennstoffzellen-Systems nach Anspruch 11, das umfasst:
Ausgeben eines Abnormalitäts-Signals, wenn in dem Feststellungsvorgang festgestellt worden ist, dass eine Abnormalität vorliegt; und
Benachrichtigen über eine Abnormalität, wenn das Abnormalitäts-Signal ausgegeben wird.

## Revendications

1. Système de pile à combustible comprenant :
une unité de pile à combustible configurée pour générer de l'énergie électrique en utilisant un gaz combustible et un gaz oxydant,
un premier réservoir d'eau configuré pour stocker au moins une eau parmi de l'eau de condensation, de l'eau de refroidissement et de l'eau chaude stockée, l'eau de condensation étant produite quand de l'humidité dans un gaz déchargé par l'unité de pile à combustible est condensée, l'eau de refroidissement étant utilisée pour le refroidissement de l'unité de pile à combustible, l'eau chaude stockée étant utilisée pour récupérer de la chaleur de l'unité de pile à combustible ;
un deuxième réservoir d'eau configuré pour stocker au moins une eau parmi l'eau de condensation, l'eau de refroidissement et l'eau chaude stockée ;
un premier capteur de quantité d'eau configuré pour détecter une quantité d'eau dans le premier réservoir d'eau ;
un deuxième capteur de quantité d'eau configuré pour détecter une quantité d'eau dans le deuxième réservoir d'eau ;
un premier mécanisme de déplacement d'eau configuré pour déplacer de l'eau dans le premier réservoir d'eau vers le deuxième réservoir d'eau ; et
un contrôleur configuré pour mettre en oeuvre le contrôle du premier mécanisme de déplacement d'eau, dans lequel le contrôleur est configuré
pour mettre en oeuvre le contrôle du premier mécanisme de déplacement d'eau pour déplacer de l'eau du premier réservoir d'eau vers le deuxième réservoir d'eau,
ensuite pour mettre en oeuvre une opération de détermination pour déterminer qu'il existe une anomalie dans au moins l'un des cas suivants : un cas où la quantité d'eau détectée par le premier capteur de quantité d'eau n'a pas diminué par rapport à la situation avant de commencer à mettre en oeuvre le contrôle du premier mécanisme de contrôle d'eau ; et un cas où la quantité d'eau détectée par le deuxième capteur de quantité d'eau n'a pas augmenté par rapport à la situation avant de commencer à mettre en oeuvre le contrôle du premier mécanisme de contrôle d'eau, et
dans l'opération de détermination,
pour déterminer qu'il existe une anomalie dans le premier capteur de quantité d'eau dans le cas où la quantité d'eau détectée par le premier capteur de quantité d'eau n'a pas diminué et la quantité de vapeur détectée par le deuxième capteur de quantité d'eau a augmenté,
pour déterminer qu'il existe une anomalie dans le deuxième capteur de quantité d'eau dans le cas où la quantité d'eau détectée par le premier capteur de quantité d'eau a diminué et la quantité d'eau détectée par le deuxième capteur de quantité d'eau n'a pas augmenté, et
pour déterminer qu'il existe une anomalie dans le premier mécanisme de déplacement d'eau dans le cas où la quantité d'eau détectée par le premier capteur de quantité d'eau n'a pas diminué et la quantité d'eau détectée par le deuxième capteur de quantité d'eau n'a pas augmenté.

2. Système de pile à combustible selon la revendication 1, dans lequel
le contrôleur est configuré pour commander une continuation du fonctionnement du système dans le cas où la quantité d'eau détectée par le premier capteur de quantité d'eau a diminué et la quantité d'eau détectée par le deuxième capteur de quantité d'eau a augmenté.

3. Système de pile à combustible selon la revendication 1 ou 2, dans lequel
le contrôleur est configuré de telle sorte que, après avoir déterminé dans l'opération de détermination qu'il existe une anomalie, le contrôleur met en oeuvre l'arrêt du fonctionnement du système et interdit ensuite un démarrage, ou met en oeuvre un redémarrage.

4. Système de pile à combustible selon l'une quelconque des revendications 1 à 3, dans lequel
le premier réservoir d'eau est agencé au-dessus du deuxième réservoir d'eau par rapport à la direction de la gravité, et
le premier mécanisme de déplacement d'eau comprend : un premier passage de connexion connectant le premier réservoir d'eau au deuxième réservoir d'eau ; et une première vanne pourvue sur le premier passage de connexion.

5. Système de pile à combustible selon l'une quelconque des revendications 1 à 3, dans lequel
le premier mécanisme de déplacement d'eau comprend : un deuxième passage de connexion connectant le premier réservoir d'eau au deuxième réservoir d'eau ; et une première pompe pourvue sur le deuxième passage de connexion et configurée pour déplacer de l'eau du premier réservoir d'eau vers le deuxième réservoir d'eau.

6. Système de pile à combustible selon la revendication 4, comprenant un deuxième mécanisme de déplacement d'eau configuré pour déplacer de l'eau dans le deuxième réservoir d'eau vers le premier réservoir d'eau, dans lequel
le deuxième mécanisme de déplacement d'eau comprend : un troisième passage de connexion connectant le premier réservoir d'eau au deuxième réservoir d'eau ; et une deuxième pompe pourvue sur le troisième passage de connexion et configurée pour déplacer de l'eau du deuxième réservoir d'eau vers le premier réservoir d'eau, et
le contrôleur est configuré pour mettre en oeuvre un contrôle d'utilisation du deuxième mécanisme de déplacement d'eau pour déplacer de l'eau du deuxième réservoir d'eau vers le premier réservoir d'eau avant d'utiliser le premier mécanisme de déplacement d'eau pour déplacer de l'eau du premier réservoir d'eau vers le deuxième réservoir d'eau.

7. Système de pile à combustible selon la revendication 5, comprenant un deuxième mécanisme de déplacement d'eau configuré pour déplacer de l'eau dans le deuxième réservoir d'eau vers le premier réservoir d'eau, dans lequel
le deuxième réservoir d'eau est agencé au-dessus du premier réservoir d'eau par rapport à la direction de la gravité,
le deuxième mécanisme de déplacement d'eau comprend : un quatrième passage de connexion connectant le premier réservoir d'eau au deuxième réservoir d'eau ; et une deuxième vanne pourvue sur le quatrième passage de connexion, et
le contrôleur est configuré pour mettre en oeuvre un contrôle d'utilisation du deuxième mécanisme de déplacement d'eau pour déplacer de l'eau du deuxième réservoir d'eau vers le premier réservoir d'eau avant d'utiliser le premier mécanisme de déplacement d'eau pour déplacer de l'eau du premier réservoir d'eau vers le deuxième réservoir d'eau.

8. Système de pile à combustible selon l'une quelconque des revendications 1 à 7, comprenant un mécanisme de déchargement d'eau configuré pour décharger de l'eau du deuxième réservoir d'eau, dans lequel
le contrôleur est configuré pour mettre en oeuvre un contrôle d'utilisation du mécanisme de déchargement d'eau pour déplacer de l'eau du deuxième réservoir d'eau avant d'utiliser le premier mécanisme de déplacement d'eau pour déplacer de l'eau du premier réservoir d'eau vers le deuxième réservoir d'eau.

9. Système de pile à combustible selon l'une quelconque des revendications 1 à 8, dans lequel
l'unité de pile à combustible comprend : un générateur d'hydrogène configuré pour générer un gaz combustible contenant de l'hydrogène en utilisant une matière première et de l'eau ; une pile à combustible configurée pour générer de l'énergie électrique en utilisant le gaz combustible et un gaz oxydant ; et une chambre de combustion configurée pour chauffer le générateur d'hydrogène en brûlant au moins une matière parmi la matière première, le gaz combustible, et un gaz d'échappement d'anode déchargé par la pile à combustible, et
l'eau de condensation est de l'eau produite quand l'humidité contenue dans au moins l'un des gaz suivants est condensée : le gaz d'échappement d'anode ; un gaz d'échappement de cathode déchargé par la pile à combustible ; et un gaz de combustion déchargé par la chambre de combustion.

10. Système de pile à combustible selon la revendication 1, dans lequel le contrôleur est configuré pour mettre en oeuvre la sortie d'un signal d'anomalie après avoir déterminé dans l'opération de détermination qu'il existe une anomalie,
le système de pile à combustible comprenant en outre un dispositif de notification d'anomalie configuré pour envoyer une notification d'anomalie dans le cas où le signal d'anomalie est sorti.

11. Procédé de fonctionnement d'un système de pile à combustible, comprenant :
la détection, par un premier capteur de quantité d'eau, d'une quantité d'eau dans un premier réservoir d'eau configuré pour stocker au moins une eau parmi de l'eau de condensation, de l'eau de refroidissement et de l'eau chaude stockée, l'eau de condensation étant produite quand de l'humidité dans un gaz déchargé par une unité de pile à combustible est condensée, l'eau de refroidissement étant utilisée dans le refroidissement d'une pile à combustible, l'eau chaude stockée étant utilisée pour récupérer de la chaleur de la pile à combustible ;
la détection, par un deuxième capteur de quantité d'eau, d'une quantité d'eau dans un deuxième réservoir d'eau configuré pour stocker au moins une eau parmi de l'eau de condensation, de l'eau de refroidissement et de l'eau chaude stockée ;
le contrôle d'un premier mécanisme de déplacement d'eau pour déplacer de l'eau du premier réservoir d'eau vers le deuxième réservoir d'eau ; et
ensuite la mise en oeuvre d'une opération de détermination pour déterminer qu'il existe une anomalie dans au moins l'un des cas suivants : un cas où la quantité d'eau détectée par le premier capteur de quantité d'eau n'a pas diminué par rapport à la situation avant le contrôle du premier mécanisme de déplacement d'eau ; et un cas où la quantité d'eau détectée par le deuxième capteur de quantité d'eau n'a pas augmenté par rapport à la situation avant le contrôle du premier mécanisme de déplacement d'eau, dans lequel
la mise en oeuvre de l'opération de détermination comprend :
la détermination qu'il existe une anomalie dans le premier capteur de quantité d'eau dans le cas où la quantité d'eau détectée par le premier capteur de quantité d'eau n'a pas diminué et la quantité d'eau détectée par le deuxième capteur de quantité d'eau a augmenté ;
la détermination qu'il existe une anomalie dans le deuxième capteur de quantité d'eau dans le cas où la quantité d'eau détectée par le premier capteur de quantité d'eau a diminué et la quantité d'eau détectée par le deuxième capteur de quantité d'eau n'a pas augmenté ; et
la détermination qu'il existe une anomalie dans le premier mécanisme de déplacement d'eau dans le cas où la quantité d'eau détectée par le premier capteur de quantité d'eau n'a pas diminué et la quantité d'eau détectée par le deuxième capteur de quantité d'eau n'a pas augmenté.

12. Procédé de fonctionnement du système de pile à combustible selon la revendication 11, comprenant la commande de poursuite du fonctionnement du système dans le cas où la quantité d'eau détectée par le premier capteur de quantité d'eau a diminué et la quantité d'eau détectée par le deuxième capteur de quantité d'eau a augmenté.

13. Procédé de fonctionnement du système de pile à combustible selon la revendication 11 ou 12, comprenant
après avoir déterminé durant la mise en oeuvre de l'opération de détermination qu'il existe une anomalie, la mise en oeuvre de l'arrêt du fonctionnement du système et ensuite d'une interdiction de démarrage, ou la mise en oeuvre d'un redémarrage.

14. Procédé de fonctionnement du système de pile à combustible selon l'une quelconque des revendications 11 à 13, comprenant
l'utilisation d'un deuxième mécanisme de déplacement d'eau, qui est configuré pour déplacer de l'eau dans le deuxième réservoir d'eau vers le premier réservoir d'eau, pour déplacer de l'eau du deuxième réservoir d'eau vers le premier réservoir d'eau avant d'utiliser le premier mécanisme de déplacement d'eau pour déplacer de l'eau du premier réservoir d'eau vers le deuxième réservoir d'eau.

15. Procédé de fonctionnement du système de pile à combustible selon l'une quelconque des revendications 11, 13 et 14, comprenant
l'utilisation d'un mécanisme de déchargement d'eau, qui est configuré pour décharger de l'eau depuis le deuxième réservoir d'eau, pour décharger de l'eau depuis le deuxième réservoir d'eau avant d'utiliser le premier mécanisme de déplacement d'eau pour déplacer de l'eau du premier réservoir d'eau vers le deuxième réservoir d'eau.

16. Procédé de fonctionnement du système de pile à combustible selon la revendication 11, comprenant :
la sortie d'un signal d'anomalie après avoir déterminé lors de l'opération de détermination qu'il existe une anomalie ; et
l'envoi d'une notification d'anomalie dans le cas où le signal d'anomalie est sorti.
